# EUROPEAN PATENT APPLICATION

(11) **EP 4 759 476 A1**
(43) Date of publication of application: **17.06.2026**
(21) Application number: 24944509.9
(22) Date of filing: 21.08.2024
(51) Int. Cl.: B23Q 1/54, B23Q 1/48

(54) **CARTRIDGE, TABLE ROTATING DEVICE, AND MACHINE TOOL**

(30) Priority: 28.06.2024 JP 2024104507
(71) Applicant: Yamazaki Mazak Corporation, Niwa-gun, Aichi 480-0197 (JP)
(72) Inventor: SATO, Kimihiko, Niwa-gun, Aichi 480-0197 (JP); OGAWA, Yukio, Niwa-gun, Aichi 480-0197 (JP); SAKAI, Nobuhiro, Niwa-gun, Aichi 480-0197 (JP)
(74) Representative: TBK
(86) International application number: PCT/JP2024/029554
(87) International publication number: WO 2026/004147

(57) **Abstract**

A cartridge includes a rotation body, a roller gear cam, a first motor, and a support component. The rotation body includes a bearing and a mounting portion on which a table configured to support a workpiece is mounted. The rotation body is rotatable about a first axis. The roller gear cam transfers drive power to the bearing to rotate the rotation body about the first axis. The first motor drives the roller gear cam. The support component is mountable on a tilt base in a state in which the support component is supporting the rotation body, the roller gear cam, and the first motor. The tilt base is tiltable about a tilt axis.

## Description

### Technical Field

The present invention relates to a cartridge, a table rotator, and a machine tool.

### Background Art

A rotation table assembly that rotates a rotation table that supports a workpiece is known.

As a related technique, Patent Literature 1 discloses an inclined rotation table assembly. The inclined rotation table assembly recited in Patent Literature 1 includes a rotation table assembly. The rotation table assembly includes a driven rotation axis, a rotation table, and a support base. The driven rotation axis is driven into rotation by a first motor. The rotation table is driven into rotation by the driven rotation axis. The support base supports the rotation table so as to be rotatable. The driven rotation axis includes a roller gear cam, and the rotation table includes a cam follower.

### Citation List

### Patent Literature

PTL 1: JP 2005-138275 A.

### Summary of Invention

### Technical Problem

It is an object of the present invention to provide a such a cartridge, such a table rotator, and such a machine tool that facilitate assembly of a table rotator.

### Solution to Problem

An embodiment of the present invention relates a cartridge, a table rotator, and a machine tool, described below.
(1) A cartridge includes a rotation body, a roller gear cam, a first motor, and a support component. The rotation body is rotatable about a first axis, and includes a mounting portion and a bearing. On the mounting portion, a table configured to support a workpiece is mounted. The roller gear cam is configured to transfer drive power to the bearing to rotate the rotation body about the first axis. The first motor is configured to drive the roller gear cam. The support component is mountable on a tilt base in a state in which the support component is supporting the rotation body, the roller gear cam, and the first motor. The tilt base is tiltable about a tilt axis.
(2) A table rotator includes a cartridge and a tilt base tiltable about a tilt axis. The cartridge includes a rotation body, a roller gear cam, a first motor, and a support component. The rotation body is rotatable about a first axis, and includes a mounting portion and a bearing. On the mounting portion, a table configured to support a workpiece is mounted. The roller gear cam is configured to transfer drive power to the bearing to rotate the rotation body about the first axis. The first motor is configured to drive the roller gear cam. The support component is mountable on the tilt base in a state in which the support component is supporting the rotation body, the roller gear cam, and the first motor. The tilt base includes a depressed portion configured to receive the roller gear cam, the first motor, and the rotation body. An insertion direction in which the roller gear cam is inserted into the depressed portion is defined as a first direction. In a view from a direction along the first direction, the rotation body, the roller gear cam, and the first motor are provided inward of an outer circumferential edge of the support component.
(3) A machine tool includes a machining head, a mover, a table rotator, and a controller. The machining head is configured to support a tool that is configured to machine a workpiece. The machining head includes a rotational driver configured to rotate the tool. The mover is configured to move the machining head relative to the workpiece. The table rotator includes a table, a cartridge, a tilt base, a support base, and a second motor. The table is configured to support the workpiece. The cartridge includes a first motor. The support base supports the tilt base so as to be tiltable. The second motor is configured to tilt the tilt base about a tilt axis relative to the support base. The controller is configured to control the rotational driver, the mover, the first motor, and the second motor. The cartridge includes a rotation body, a roller gear cam, the first motor, and a support component. The rotation body is rotatable about a first axis, and includes a mounting portion and a bearing. On the mounting portion, the table is mounted. The roller gear cam is configured to transfer drive power to the bearing to rotate the rotation body about the first axis. The first motor is configured to drive the roller gear cam. The support component is mountable on the tilt base in a state in which the support component is supporting the rotation body, the roller gear cam, and the first motor. The tilt base includes a depressed portion configured to receive the roller gear cam, the first motor, and the rotation body. An insertion direction in which the roller gear cam is inserted into the depressed portion is defined as a first direction. In a view from a direction along the first direction, the rotation body, the roller gear cam, and the first motor are provided inward of an outer circumferential edge of the support component.

### Effects of Invention

The present invention provides a such a cartridge, such a table rotator, and such a machine tool that facilitate assembly of a table rotator.

### Brief Description of Drawings

[FIG. 1] FIG. 1 is a schematic perspective view of a cartridge according to a first embodiment.
[FIG. 2] FIG. 2 is a schematic cross-sectional view of the cartridge according to the first embodiment.
[FIG. 3] FIG. 3 is a schematic perspective view of the cartridge according to the first embodiment, illustrating how the cartridge is mounted on a tilt base.
[FIG. 4] FIG. 4 is a schematic perspective view of the cartridge according to the first embodiment, illustrating a state in which the cartridge is mounted on the tilt base.
[FIG. 5] FIG. 5 is a schematic top view of the cartridge according to the first embodiment.
[FIG. 6] FIG. 6 is a schematic illustration of an arrangement relationship between a roller gear cam and a bearing.
[FIG. 7] FIG. 7 is a schematic cross-sectional view of a part of the cartridge according to the first embodiment.
[FIG. 8] FIG. 8 is a schematic cross-sectional view of a table rotator according to the first embodiment.
[FIG. 9] FIG. 9 is a schematic cross-sectional view of a part of the table rotator according to the first embodiment.
[FIG. 10] FIG. 10 is a schematic perspective view of a part of the table rotator according to the first embodiment.
[FIG. 11] FIG. 11 is a schematic cross-sectional view of a cartridge according to a first modification of the first embodiment.
[FIG. 12] FIG. 12 is a schematic cross-sectional view of the cartridge according to the first embodiment.
[FIG. 13] FIG. 13 is a schematic perspective view of a part of the cartridge according to the first embodiment.
[FIG. 14] FIG. 14 is a schematic perspective view of the table rotator according to the first embodiment.
[FIG. 15] FIG. 15 is a schematic perspective view of the table rotator according to the first embodiment.
[FIG. 16] FIG. 16 is a schematic perspective view of the tilt base in a state in which a plurality of covers are removed.
[FIG. 17] FIG. 17 is a schematic perspective view of a part of the table rotator according to the first embodiment.
[FIG. 18] FIG. 18 is a schematic perspective view of the table rotator according to the first embodiment.
[FIG. 19] FIG. 19 is a schematic perspective view of the table rotator, illustrating a state in which a third cover and a closing plate are removed from the table rotator.
[FIG. 20] FIG. 20 is a schematic perspective view of the table rotator, illustrating a state in which the third cover is removed from the table rotator.
[FIG. 21] FIG. 21 is a schematic perspective view of the table rotator according to the first embodiment.
[FIG. 22] FIG. 22 is a schematic perspective view of the table rotator, illustrating a state in which a fourth cover and a lid component are removed from the table rotator.
[FIG. 23] FIG. 23 is a schematic perspective view of the table rotator, illustrating a state in which a fourth cover is removed from the table rotator.
[FIG. 24] FIG. 24 is a schematic perspective view of the table rotator according to the first embodiment.
[FIG. 25] FIG. 25 is an enlarged view of the area surrounded by circle A illustrated in FIG. 8.
[FIG. 26] FIG. 26 is a schematic cross-sectional view of a part of the table rotator according to the first embodiment.
[FIG. 27] FIG. 27 is a schematic perspective view of a cartridge according to the second embodiment, illustrating how the cartridge is mounted on the tilt base.
[FIG. 28] FIG. 28 is a schematic perspective view of the cartridge according to the second embodiment, illustrating how the cartridge is mounted on the tilt base.
[FIG. 29] FIG. 29 is a schematic perspective view of the cartridge according to the second embodiment, illustrating a state in which the cartridge is mounted on the tilt base.
[FIG. 30] FIG. 30 is a schematic top view of the cartridge according to the second embodiment.
[FIG. 31] FIG. 31 is a schematic perspective view of a machine tool according to a third embodiment.
[FIG. 32] FIG. 32 is a schematic perspective view of the machine tool according to the third embodiment.
[FIG. 33] FIG. 33 is a schematic illustration of how a controller is capable of controlling a plurality of control target instruments.

### Description of Embodiments

By referring to the accompanying drawings, a cartridge 10, a table rotator 1, and a machine tool 100 according to an embodiment will be described. It is noted that in the following description of the embodiments, identical reference numerals are used to denote identical portions, members, or components having identical functions, and redundant description of identical portions, members, or components will be eliminated or minimized.

### (First Embodiment)

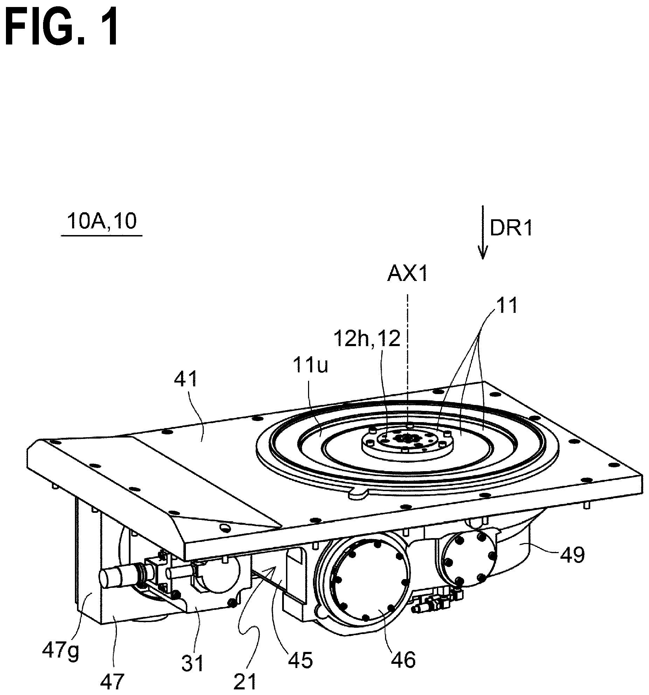

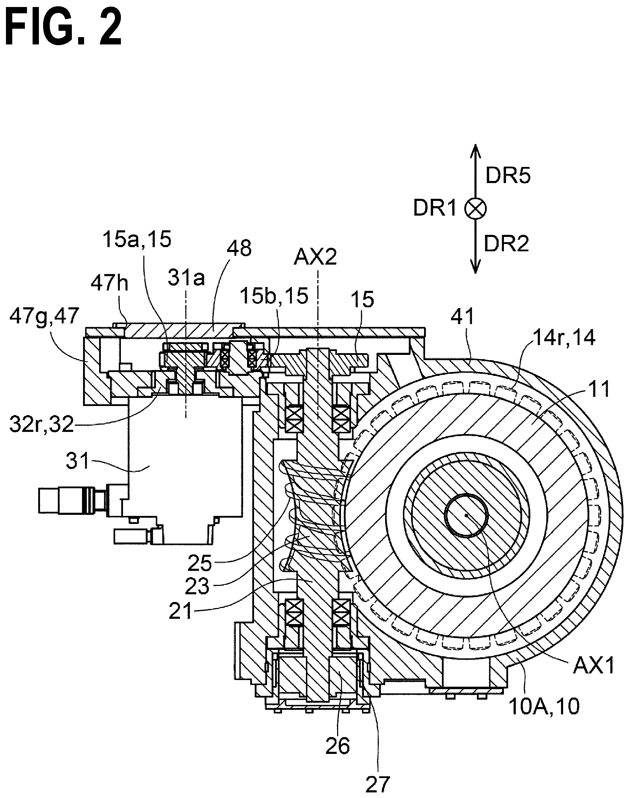

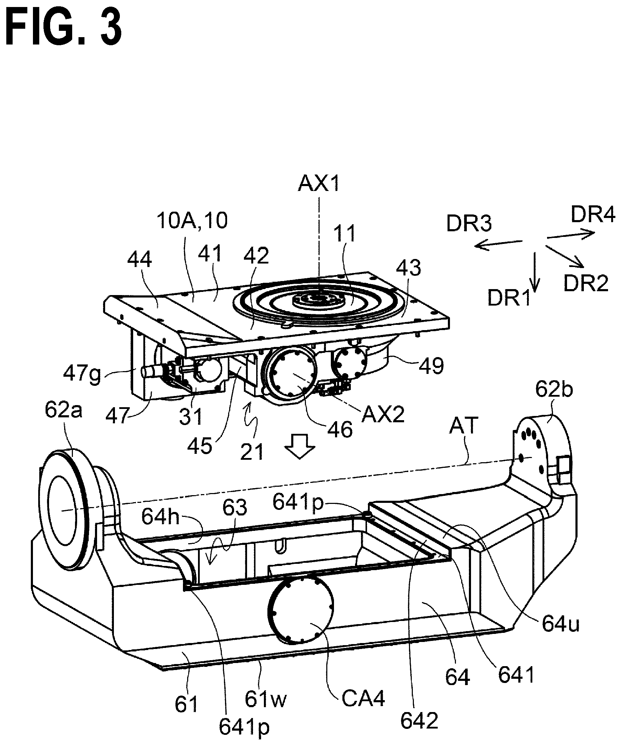

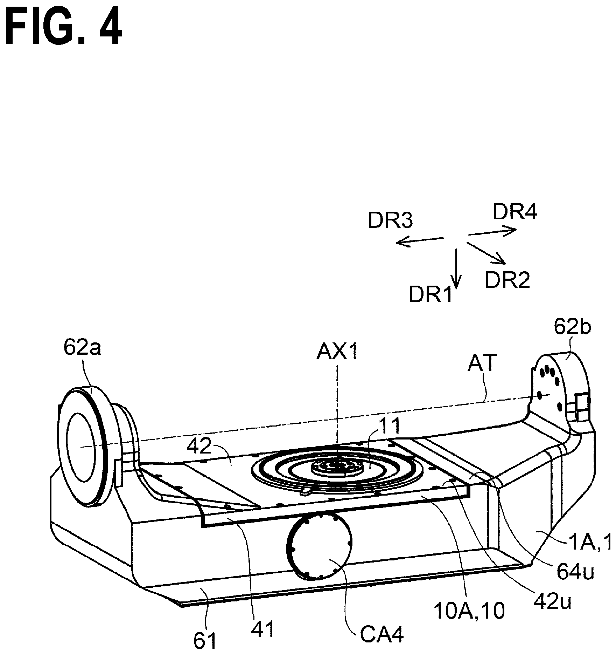

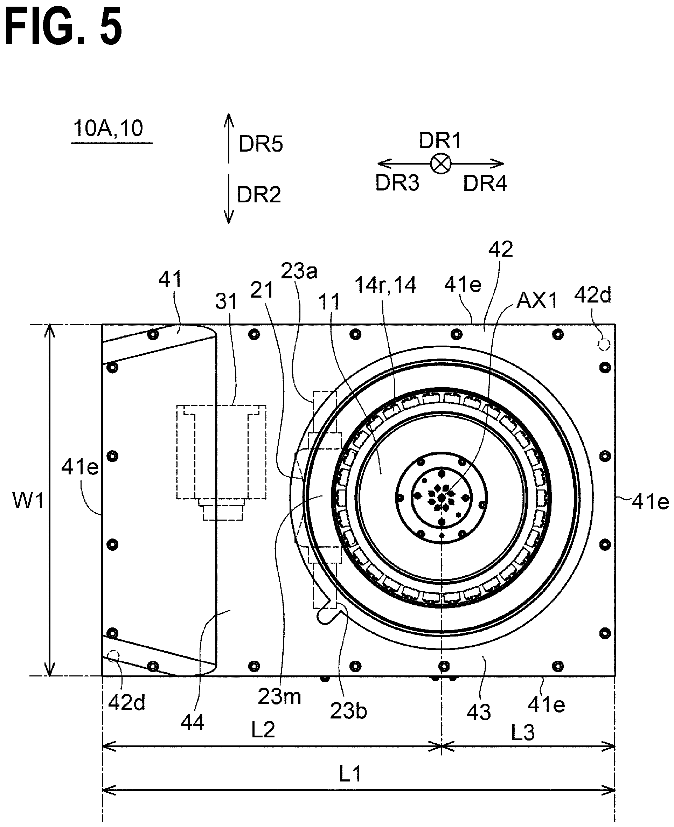

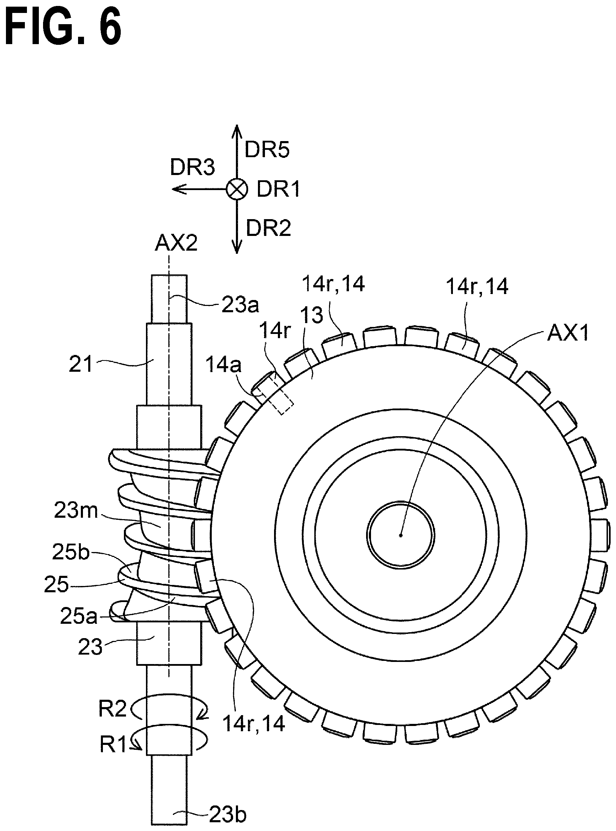

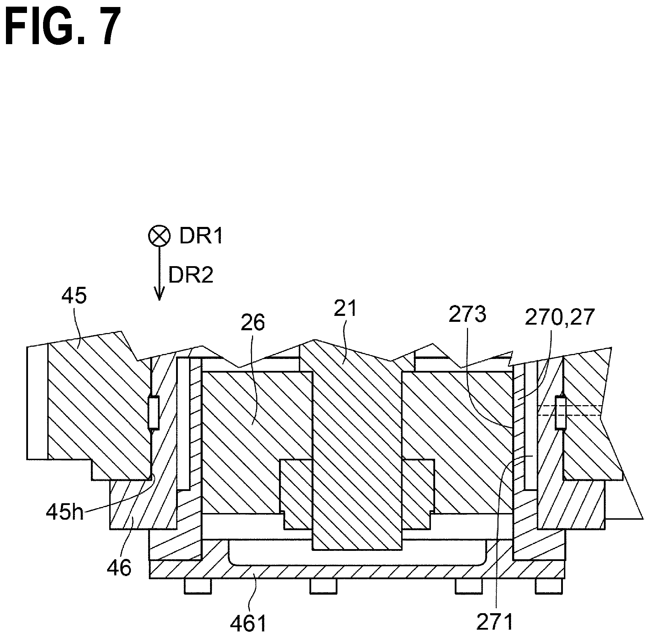

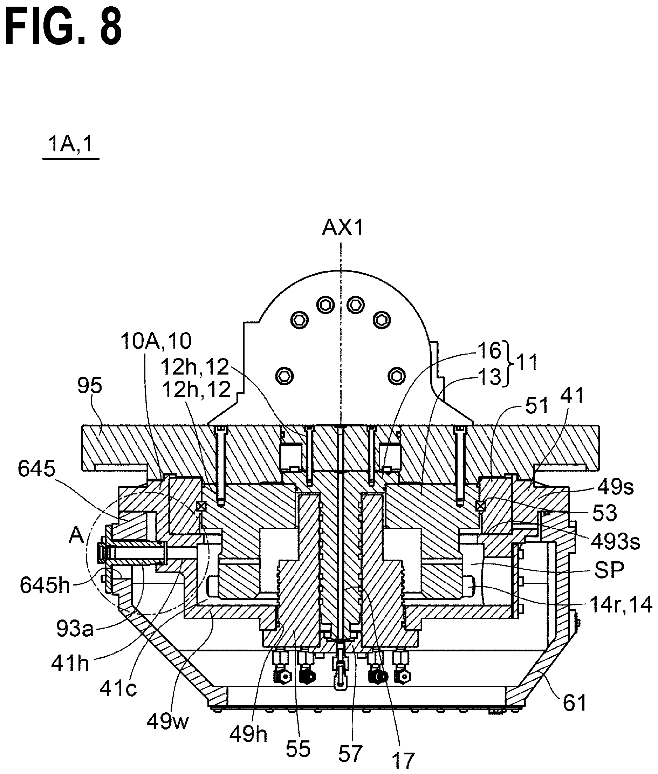

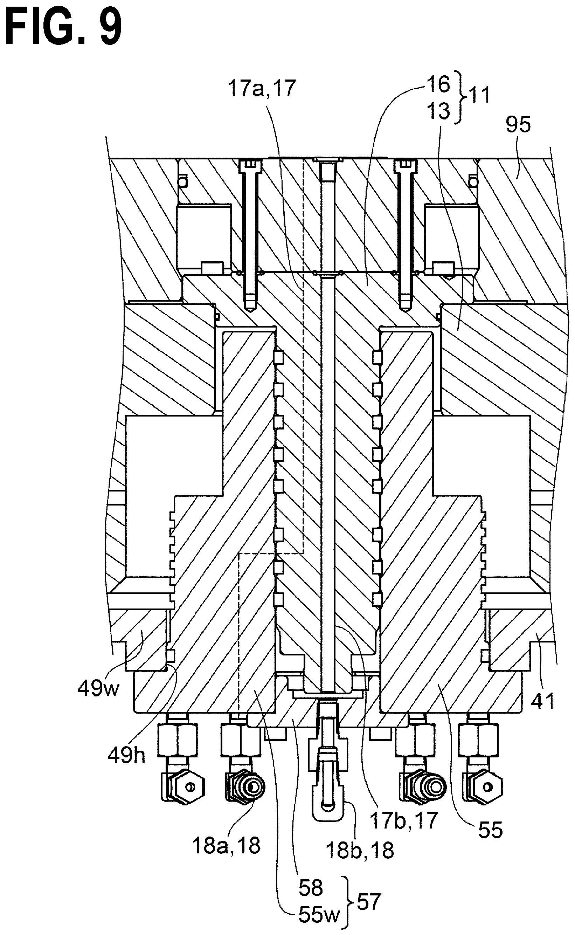

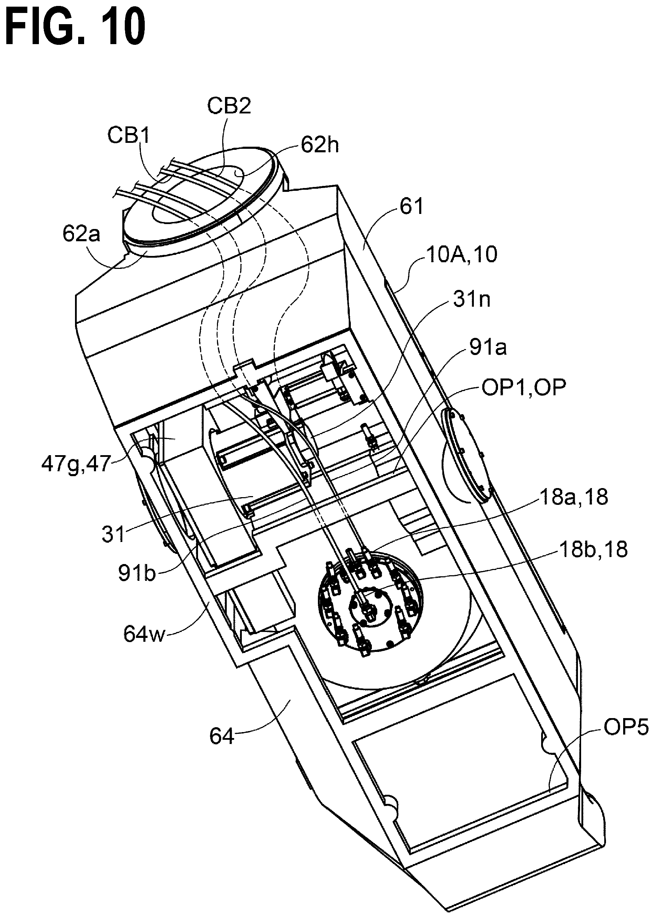

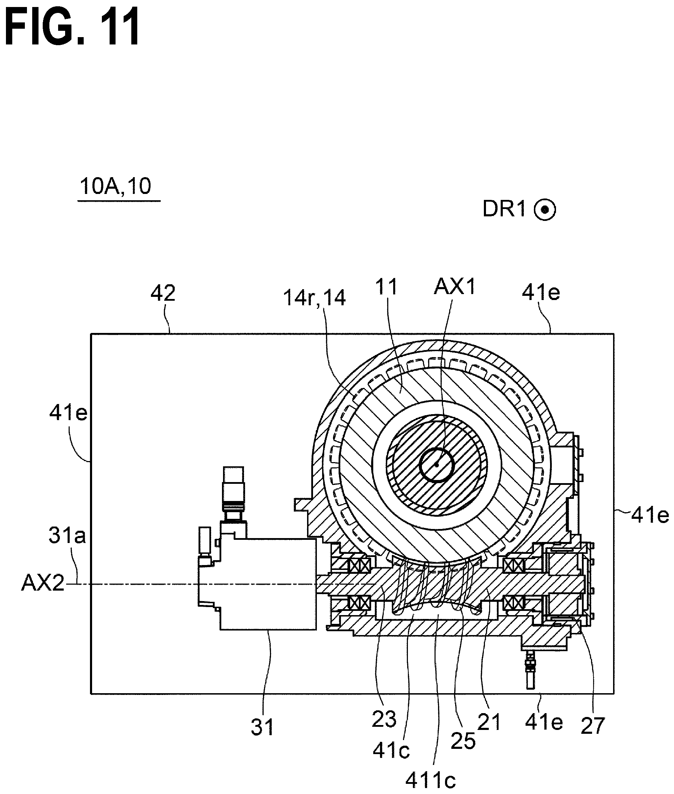

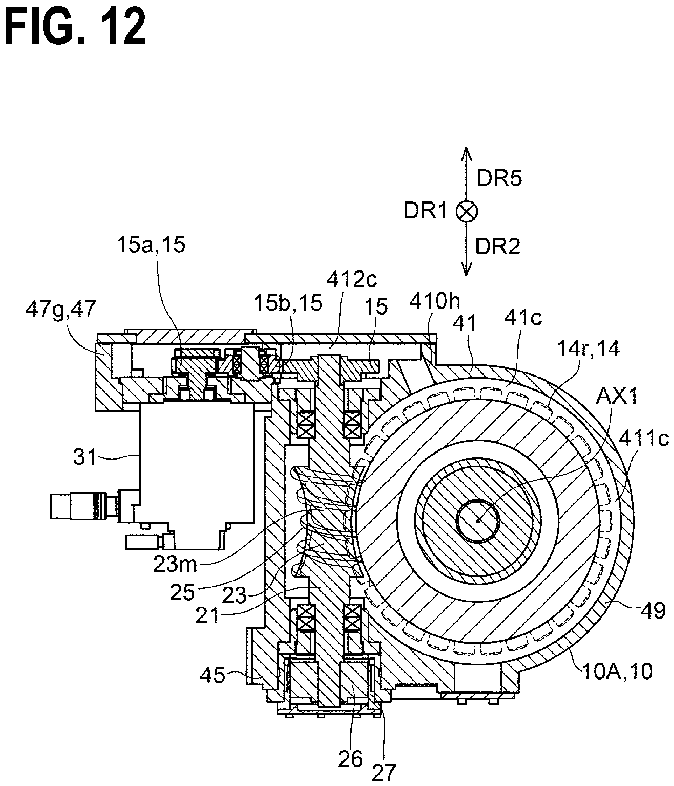

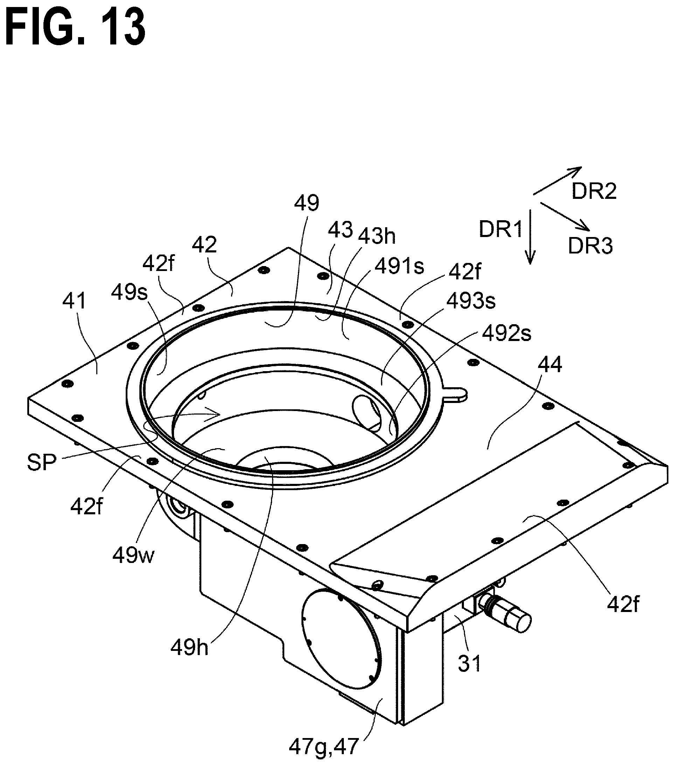

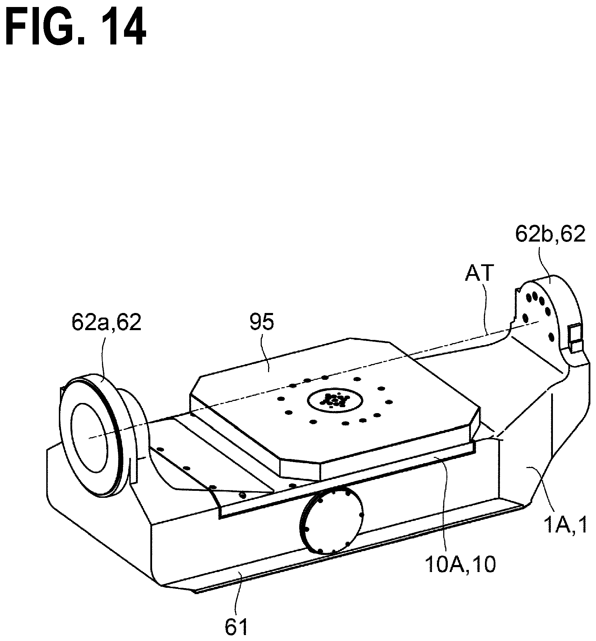

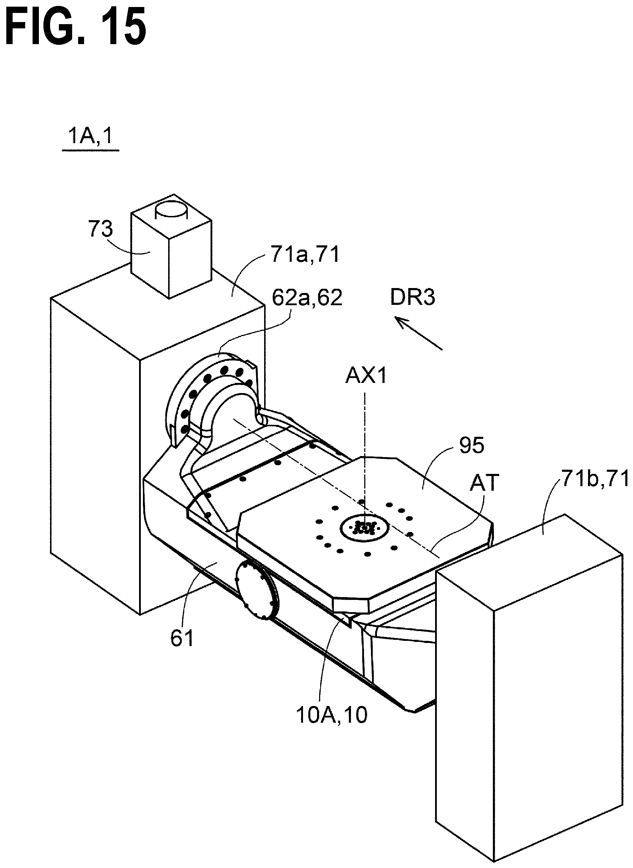

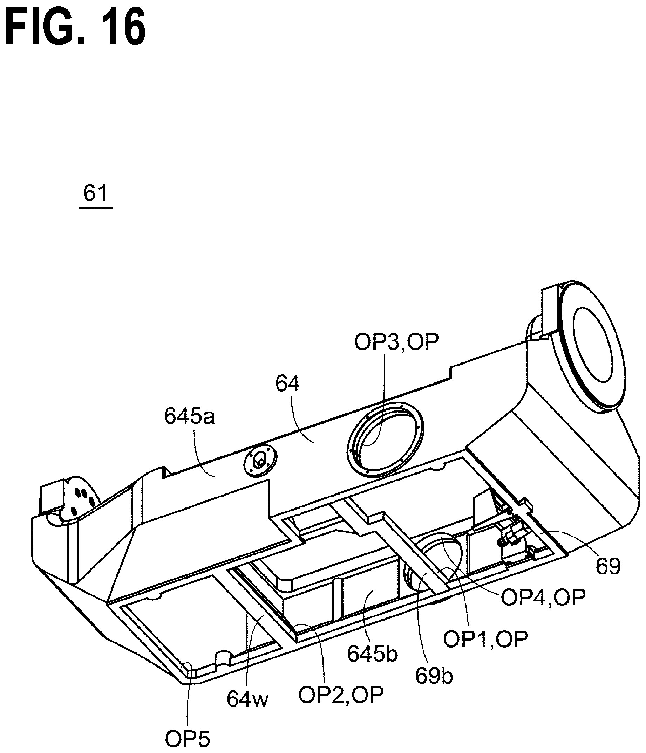

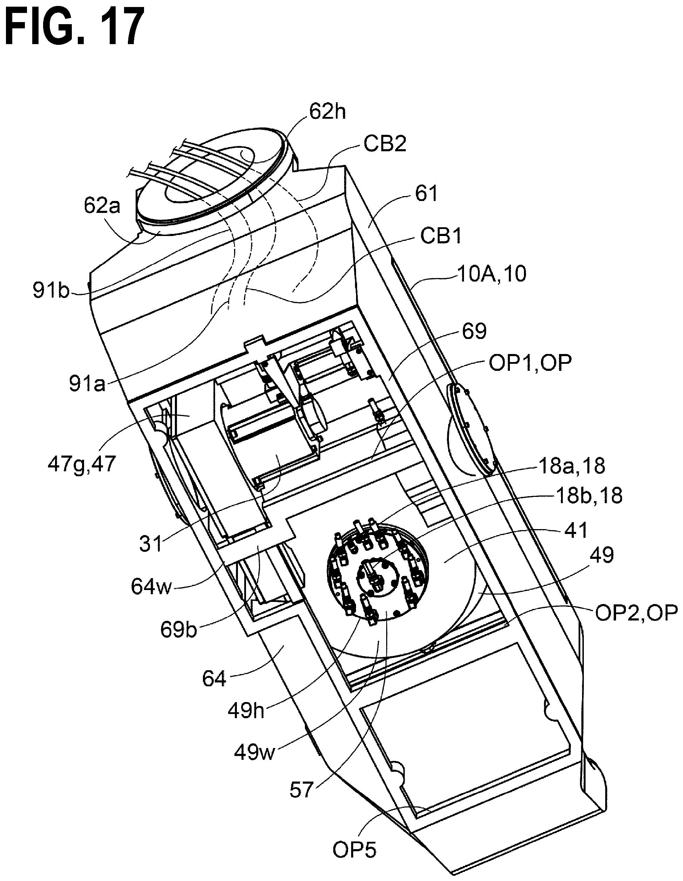

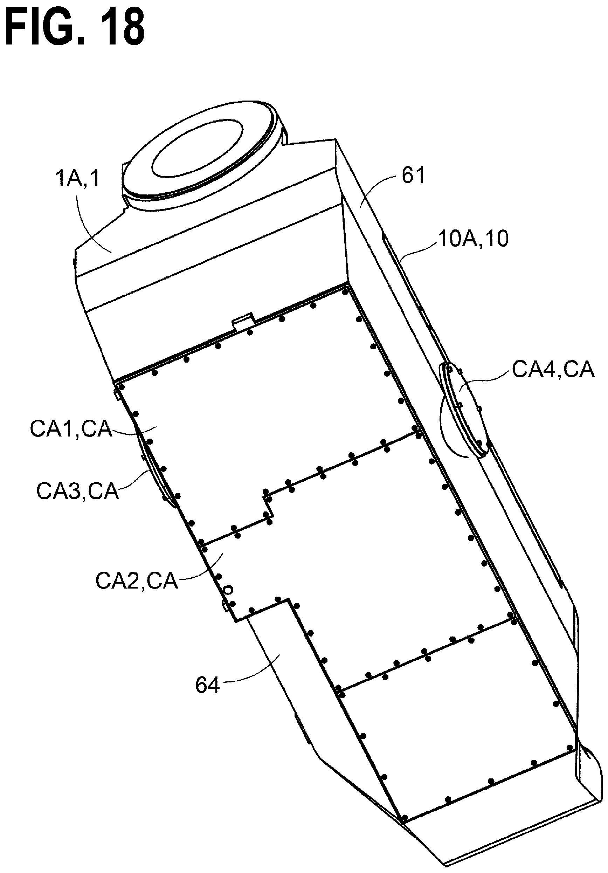

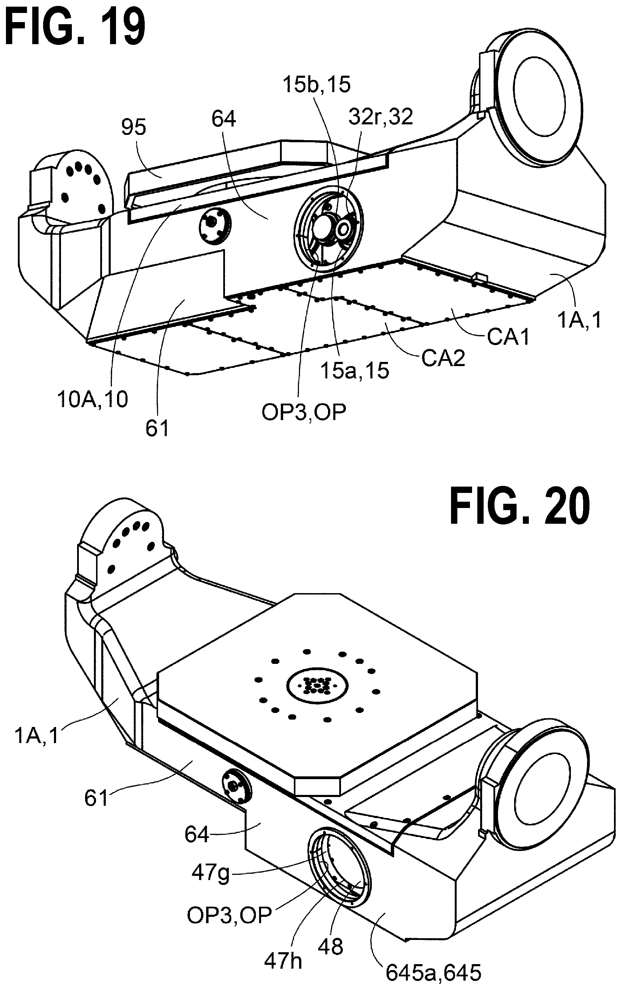

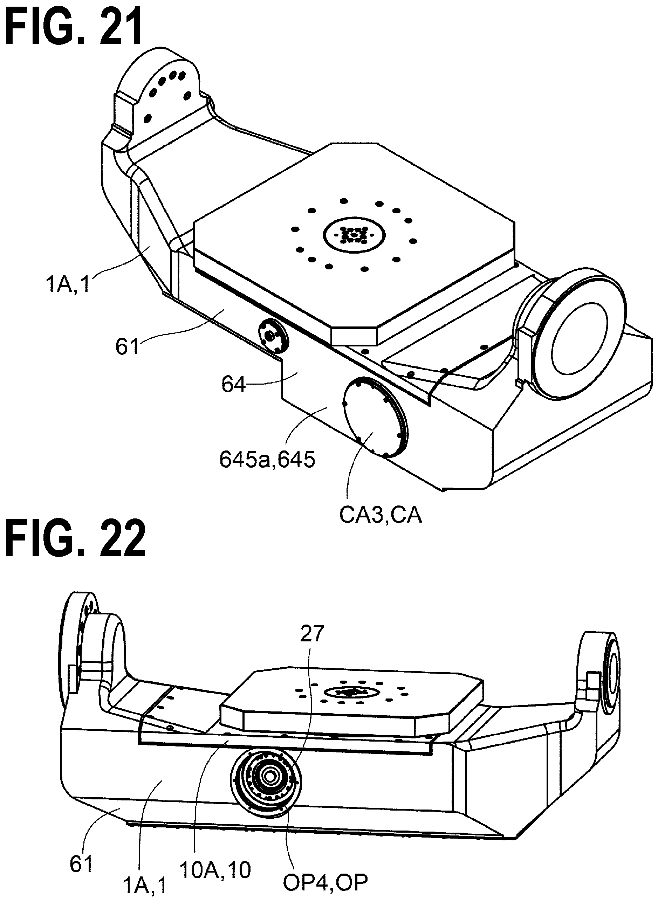

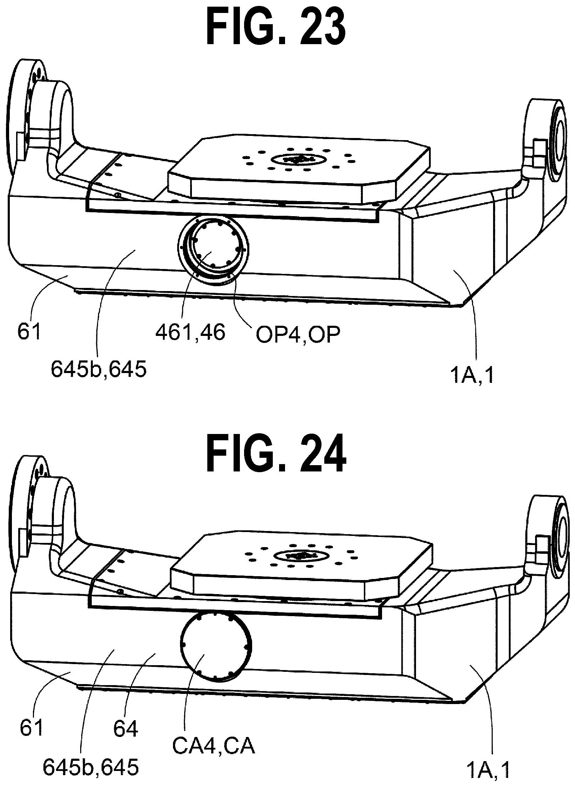

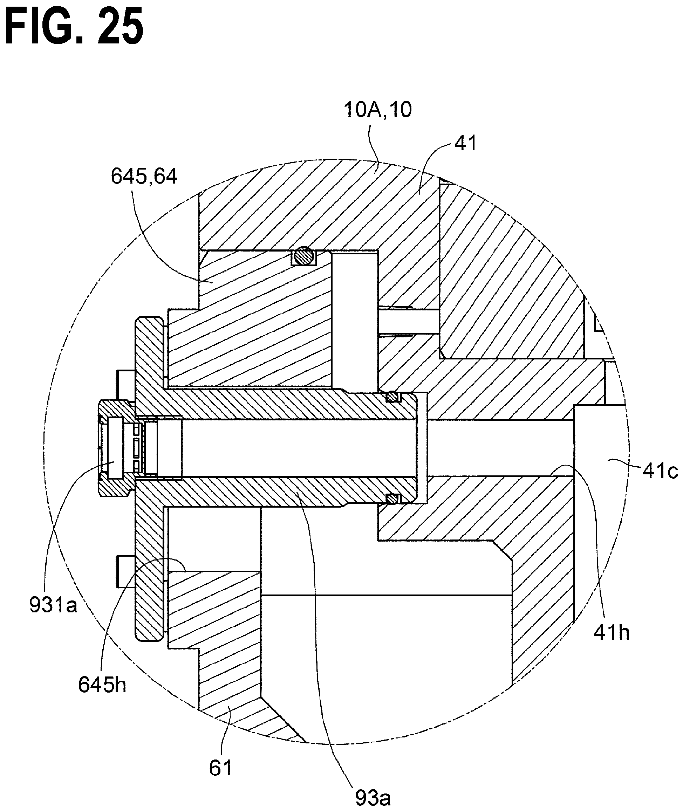

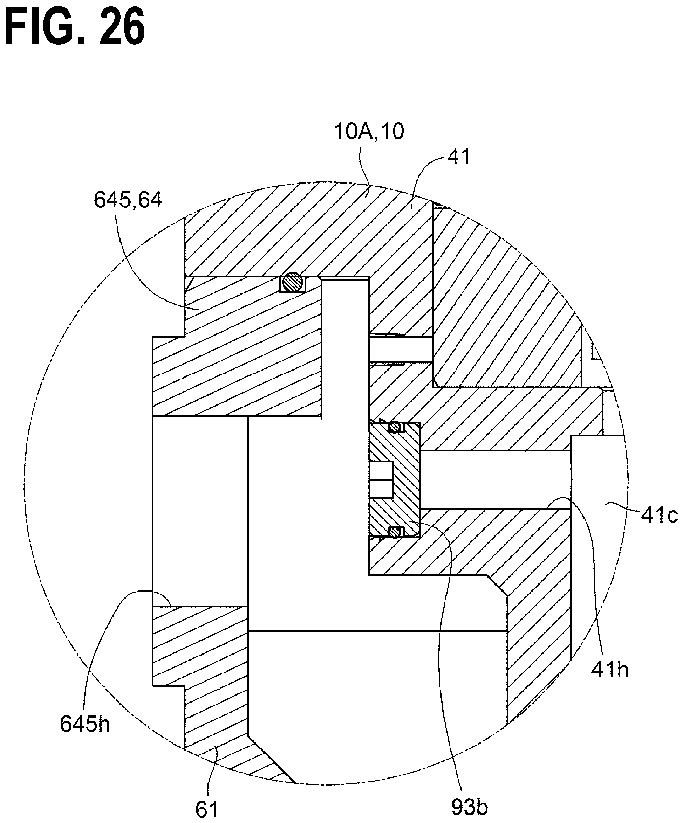

By referring to FIGs. 1 to 26, a cartridge 10A according to the first embodiment and a table rotator 1A according to a first embodiment will be described. FIG. 1 is a schematic perspective view of the cartridge 10A according to the first embodiment. FIG. 2 is a schematic cross-sectional view of the cartridge 10A according to the first embodiment. It is to be noted that to avoid complexity of illustration, illustration of the internal structure of the first motor 31 is omitted in FIG. 2. Also in FIG. 2, to make the shape of a protrusion 25 of a roller gear cam 21 and the shape of each of bearings 14 easily recognizable, the protrusion 25 and the each bearing 14 are each illustrated in the form of a schematic plan view. FIG. 3 is a schematic perspective view of the cartridge 10A according to the first embodiment, illustrating how the cartridge 10A is mounted on a tilt base 61. FIG. 4 is a schematic perspective view of the cartridge 10A according to the first embodiment, illustrating a state in which the cartridge 10A is mounted on the tilt base 61. FIG. 5 is a schematic top view of the cartridge 10A according to the first embodiment. It is to be noted that in FIG. 5, to make the position of each of the first motor 31, the roller gear cam 21, and the each bearing 14 easily recognizable, the first motor 31, the roller gear cam 21, and the each bearing 14 are schematically indicated by broken lines. FIG. 6 is a schematic illustration of an arrangement relationship between the roller gear cam 21 and the bearings 14. FIG. 7 is a schematic cross-sectional view of a part of the cartridge 10A according to the first embodiment. FIG. 8 is a schematic cross-sectional view of the table rotator 1A according to the first embodiment. FIG. 9 is a schematic cross-sectional view of a part of the table rotator 1A according to the first embodiment. FIG. 10 is a schematic perspective view of a part of the table rotator 1A according to the first embodiment. FIG. 11 is a schematic cross-sectional view of a cartridge 10A according to a first modification of the first embodiment. It is to be noted that to avoid complexity of illustration, illustration of the internal structure of the first motor 31 is omitted in FIG. 11. Also in FIG. 11, to make the shape of the protrusion 25 of the roller gear cam 21 and the shape of each bearing 14 easily recognizable, the protrusion 25 and the each bearing 14 are each illustrated in the form of a schematic bottom view. FIG. 12 is a schematic cross-sectional view of the cartridge 10A according to the first embodiment. It is to be noted that to avoid complexity of illustration, illustration of the internal structure of the first motor 31 is omitted in FIG. 12. Also in FIG. 12, to make the shape of the protrusion 25 of the roller gear cam 21 and the shape of each bearing 14 easily recognizable, the protrusion 25 and the each bearing 14 are each illustrated in the form of a schematic plan view. FIG. 13 is a schematic perspective view of a part of the cartridge 10A according to the first embodiment. FIG. 14 is a schematic perspective view of the table rotator 1A according to the first embodiment. FIG. 15 is a schematic perspective view of the table rotator 1A according to the first embodiment. FIG. 16 is a schematic perspective view of the tilt base 61 in a state in which a plurality of covers are removed. FIG. 17 is a schematic perspective view of a part of the table rotator 1A according to the first embodiment. FIG. 18 is a schematic perspective view of the table rotator 1A according to the first embodiment. FIG. 19 is a schematic perspective view of the table rotator 1A, illustrating a state in which a third cover and a closing plate are removed from the table rotator 1A. FIG. 20 is a schematic perspective view of the table rotator 1A, illustrating a state in which the third cover is removed from the table rotator 1A. FIG. 21 is a schematic perspective view of the table rotator 1A according to the first embodiment. FIG. 22 is a schematic perspective view of the table rotator 1A, illustrating a state in which a fourth cover and a lid component are removed from the table rotator 1A. FIG. 23 is a schematic perspective view of the table rotator 1A, illustrating a state in which a fourth cover is removed from the table rotator 1A. FIG. 24 is a schematic perspective view of the table rotator 1A according to the first embodiment. FIG. 25 is an enlarged view of the area surrounded by circle A illustrated in FIG. 8. FIG. 26 is a schematic cross-sectional view of a part of the table rotator 1A according to the first embodiment.

As exemplified in FIGs. 1 and 2, the cartridge 10A according to the first embodiment includes a rotation body 11, the roller gear cam 21, the first motor 31, and a support component 41.

The rotation body 11 is rotatable about a first axis AX1. The rotation body 11 includes a mounting portion 12 (see FIG. 1) and the bearings 14 (see FIG. 2). On the mounting portion 12, a table that supports a workpiece is mounted. In the example illustrated in FIG. 1, the mounting portion 12 is provided at an apex portion 11u of the rotation body 11. The mounting portion 12 may include a hole 12h. The hole 12h receives a shank portion of a bolt. In the example illustrated in FIG. 2, the bearings 14 are provided at a side portion of the rotation body 11.

As exemplified in FIG. 2, the roller gear cam 21 transfers drive power to the bearings 14. The roller gear cam 21 also rotates the rotation body 11 about the first axis AX1. More specifically, the roller gear cam 21 transfers drive power to the bearings 14 to rotate the rotation body 11 about the first axis AX1.

The first motor 31 drives the roller gear cam 21. More specifically, the first motor 31 drives the roller gear cam 21 into rotation about a second axis AX2 (see FIG. 2).

As exemplified in FIG. 1, the support component 41 supports the rotation body 11, the roller gear cam 21, and the first motor 31. As exemplified in FIGs. 3 and 4, the support component 41 is mounted on the tilt base 61. The tilt base 61 is tiltable about a tilt axis AT.

In the examples illustrated in FIGs. 3 and 4, the support component 41 is mountable on the tilt base 61 in a state in which the support component 41 is supporting the rotation body 11, the roller gear cam 21, and the first motor 31.

The cartridge 10A according to the first embodiment includes: the rotation body 11, which includes the bearings 14; the roller gear cam 21; the first motor 31; and the support component 41, which supports these elements. This configuration facilitates assembly of a table rotator as compared with a case that the rotation body that includes the roller gear cam, the first motor, and the bearing is directly mounted on the tilt base. The above configuration also makes the support component 41 smaller in size and lighter in weight than the tilt base, making the support component 41 more easily handled.

The cartridge 10A is smaller in size than the tilt base 61. This configuration ensures that the assembly space necessary for mounting the roller gear cam 21 and other elements on the cartridge 10A is smaller than the assembly space necessary for mounting the roller gear cam and other elements directly on the tilt base.

In a case that the rotation body is rotated using a direct drive motor, the direct drive motor is provided concentrically with the rotation body. Thus, no difficulty arises when the rotating body with the direct drive motor are integrated. Also, no difficulty arises when a unit in which the rotation body and the direct drive motor are integrated is inserted into a solid cylindrical space of the tilt base (that is, a space approximately corresponding to the shape of the rotation body).

In contrast, the roller gear cam and the first motor, which drives the roller gear cam, are decentered from the rotation body, which includes the bearings. Due to this configuration, it is impossible to simultaneously perform insertion of the rotation body into the solid cylindrical space of the tilt base and insertion of the roller gear cam and the first motor into the space under an upper plate of the tilt base.

Under the circumstances, conventional practice was to independently mount the roller gear cam on the tilt base, independently mount the first motor on the tilt base, and independently mount the rotation body, which includes the bearings, on the tilt base. In contrast, in the first embodiment, the rotation body 11 (which includes the bearings 14), the roller gear cam 21, the first motor 31, and the support component 41 (which supports these elements) are integrated into a cartridge. This configuration facilitates assembly of the table rotator, improving the efficiency of assembly of the table rotator.

As exemplified in FIGs. 3 and 4, the table rotator 1A according to the first embodiment includes the cartridge 10A and the tilt base 61, which is tiltable about the tilt axis AT. The cartridge 10A has already been described above, and a description of the cartridge 10A will be omitted where otherwise a repetition of description occurs.

In the example illustrated in FIG. 3, the tilt base 61 includes a depressed portion 63 (more specifically, a housing 64). The depressed portion 63 receives the roller gear cam 21, the first motor 31, and the rotation body 11.

In this specification, the insertion direction in which the roller gear cam 21 is inserted into the depressed portion 63 (more specifically, the insertion direction in which the roller gear cam 21 is inserted into the internal space of the housing 64) is defined as first direction *DR1.* In the example illustrated in FIG. 5, in a view from a direction along the first direction *DR1,* the rotation body 11, the roller gear cam 21, and the first motor 31 are provided inward of an outer circumferential edge 41e of the support component 41. As exemplified in FIG. 5, in the view from a direction along the first direction *DR1*, the outer circumferential edge 41e of the support component 41 may have an approximately rectangular shape.

In the table rotator 1A according to the first embodiment, the cartridge 10A includes the rotation body 11 (which includes the bearings 14), the roller gear cam 21, the first motor 31, and the support component 41, which supports these elements. By mounting such cartridge 10A on the tilt base 61, assembly of the table rotator 1A is facilitated.

In the table rotator 1A according to the first embodiment, in a view from a direction along the first direction *DR1*, the rotation body 11, the roller gear cam 21, and the first motor 31 are provided inward of the outer circumferential edge 41e of the support component 41. This configuration ensures that by moving the cartridge 10A in the first direction *DR1*, the roller gear cam 21, the first motor 31, and a majority part of the rotation body 11 can be easily inserted into the depressed portion 63 of the tilt base 61 (more specifically, the internal space of the housing 64). For example, at the time when the roller gear cam 21 and the first motor 31 inserted into the depressed portion 63 of the tilt base 61, it is not necessary to tilt the support component 41. Additionally, after the cartridge 10A is mounted on the tilt base 61, the support component 41 itself serves as a component that covers the roller gear cam 21 and the first motor 31.

In the example illustrated in FIG. 5, in a view from a direction along the first axis AX1, the rotation body 11, the roller gear cam 21, and the first motor 31 are provided inward of the outer circumferential edge 41e of the support component 41. In this case, by moving the cartridge 10A in the direction along the first axis AX1, the roller gear cam 21, the first motor 31, and a majority part of the rotation body 11 can be easily inserted into the depressed portion 63 of the tilt base 61 (more specifically, the internal space of the housing 64). For example, at the time when the roller gear cam 21 and the first motor 31 are inserted into the depressed portion 63 of the tilt base 61, it is not necessary to tilt the support component 41. Additionally, after the cartridge 10A is mounted on the tilt base 61, the support component 41 itself serves as a component that covers the roller gear cam 21 and the first motor 31. In the examples illustrated in FIGs. 3 and 4, the direction along the first axis AX1 and the first direction *DR1* are substantially parallel.

It is preferable that the portion that supports the rotation body 11 and the portion that supports the roller gear cam 21 are prepared highly accurately. In the examples illustrated in FIGs. 3 and 4, the size of the support component 41 of the cartridge 10A is smaller than the size of the tilt base 61. This configuration makes it comparatively easy to prepare the support component 41 highly accurately. Also in the examples illustrated in FIGs. 3 and 4, the tilt base 61 merely provides indirect support for the roller gear cam 21 and other elements. Accordingly, excessive precision is not required in the preparation of the tilt base 61. As a result, the requirements imposed on the machining apparatus used to prepare the tilt base are relaxed. In contrast, in a case of a conventional table rotator in which the tilt base directly supports the roller gear cam, it is necessary to prepare a tilt base using a large-size and highly accurate machining apparatus. Accordingly, the range of machining apparatuses capable of preparing the tilt base is limited.

### (Optional Configurations)

Next, by referring to FIGs. 1 to 26, optional configurations employable in the first embodiment (or in the second embodiment, described later) will be described.

### (Roller Gear Cam 21 and Bearings 14)

In the example illustrated in FIG. 2, the roller gear cam 21 is rotatable about a second axis AX2. As exemplified in FIG. 6, the roller gear cam 21 includes a gear shaft 23 and the protrusion 25. The gear shaft 23 extends along the second axis AX2. The protrusion 25 is spirally provided on an outer circumferential surface of the gear shaft 23. The protrusion 25 presses the bearings 14. In the example illustrated in FIG. 6, the gear shaft 23 and the protrusion 25 are integrally formed. In other words, the gear shaft 23 and the protrusion 25 are made up of a single, integrated part. The roller gear cam 21 may include a rotor 26 (see FIG. 2). The rotor 26 is rotatable about the second axis AX2 together with the gear shaft 23.

In the example illustrated in FIG. 6, the size of the protrusion 25 gradually increases from a center portion 23m of the gear shaft 23 (more specifically, the center portion 23m of the gear shaft 23 in a direction along the second axis AX2) toward one end portion 23a of the gear shaft 23. More specifically, the distance between the second axis AX2 and an outer edge of the protrusion 25 gradually increases from the center portion 23m of the gear shaft 23 toward the one end portion 23a of the gear shaft 23.

In the example illustrated in FIG. 6, the size of the protrusion 25 gradually increases from the center portion 23m of the gear shaft 23 toward an other end portion 23b of the gear shaft 23. More specifically, the distance between the second axis AX2 and the outer edge of the protrusion 25 gradually increases from the center portion 23m of the gear shaft 23 toward the other end portion 23b of the gear shaft 23.

As exemplified in FIG. 6, the direction from the one end portion 23a of the gear shaft 23 toward the other end portion 23b of the gear shaft 23 is defined as second direction *DR2*, and the direction opposite to the second direction *DR2* is defined as fifth direction *DR5.* In the example illustrated in FIG. 6, the protrusion 25 includes a first pressing surface 25a. The first pressing surface 25a presses the bearings 14 in the second direction *DR2.* When the gear shaft 23 rotates in first rotation direction *R1* about the second axis AX2, the first pressing surface 25a presses each bearing 14 (more specifically, the roller 14r of the each bearing 14) in the second direction *DR2.* In the example illustrated in FIG. 6, the protrusion 25 includes a second pressing surface 25b. The second pressing surface 25b presses the bearings 14 in the fifth direction *DR5.* When the gear shaft 23 rotates in second rotation direction R2 (in other words, in the direction opposite to the first rotation direction *R1*) about the second axis AX2, the second pressing surface 25b presses each bearing 14 (more specifically, the roller 14r of the each bearing 14) in the fifth direction *DR5.*

In the example illustrated in FIG. 6, the rotation body 11 includes a plurality of bearings 14. The plurality of bearings 14 are provided at equal angular intervals about the first axis AX1. Each of the plurality of bearings 14 includes the roller 14r. The roller 14r of each bearing 14 is pressed by the protrusion 25 of the roller gear cam 21 so that the roller 14r makes a rolling motion relative to the protrusion 25 (more specifically, the first pressing surface 25a or the second pressing surface 25b). As exemplified in FIG. 6, each bearing 14 may include the roller 14r and a shank portion 14a. The shank portion 14a supports the roller 14r so as to be rotatable. In the example illustrated in FIG. 6, a ring 13, which is a part of the rotation body 11, supports the bearings 14. More specifically, the ring 13, which is a part of the rotation body 11, supports the roller 14r via the shank portion 14a. Alternatively, the shank portion 14a may be rotatable about a center axis of the shank portion 14a together with the roller 14r. In the example illustrated in FIG. 6, a rotation axis of the roller 14r (more specifically, the extending direction in which the shank portion 14a extends) is substantially perpendicular to the first axis AX1.

In the example illustrated in FIG. 7, the cartridge 10A includes a lock component 27. The lock component 27 locks rotation of the roller gear cam 21. The lock component 27 may lock the rotation of the roller gear cam 21 using hydraulic pressure or pneumatic pressure.

In the example illustrated in FIG. 7, the lock component 27 includes a clamp component 270. The clamp component 270 applies pressing force (more specifically, frictional force) to the roller gear cam 21 (more specifically, the rotor 26) to lock the rotation of the roller gear cam 21. The clamp component 270 may include a chamber 271 and a pressing surface 273. The chamber 271 receives oil. The pressing surface 273 presses the roller gear cam 21 (more specifically, the rotor 26) based on an increase in internal pressure of the chamber 271.

### (Rotation Body 11 and Outer Ring 51)

In the example illustrated in FIG. 8, the cartridge 10A includes the rotation body 11 and an outer ring 51. The outer ring 51 supports the rotation body 11 so as to be rotatable about the first axis AX1. The cartridge 10A also includes a bearing 53. The outer ring 51 supports the rotation body 11 via the bearing 53 so as to be rotatable about the first axis AX1.

In the example illustrated in FIG. 8, the rotation body 11 includes an ring 13 and a rotation shaft 16. The rotation shaft 16 extends along the first axis AX1. The inner ring 13 is provided inward of the outer ring 51 and concentrically with the outer ring 51. The inner ring 13 includes the mounting portion 12. On the mounting portion 12, a table 95 is mounted. The bearing 53 is provided between the inner ring 13 and the outer ring 51. In the example illustrated in FIG. 8, the outer ring 51 is fixed to the support component 41.

In the example illustrated in FIG. 8, the rotation shaft 16 is fixed to the inner ring 13. A fluid passage 17 may be provided in the rotation shaft 16 of the rotation body 11. Through the fluid passage 17, fluid such as air, oil, or coolant liquid passes. In the example illustrated in FIG. 9, a first fluid passage 17a is provided in the rotation shaft 16. Through the first fluid passage 17a, working fluid (for example, oil) that operates a chuck holding the workpiece passes. Also in the example illustrated in FIG. 9, a second fluid passage 17b is formed in the rotation shaft 16. Through the second fluid passage 17b, coolant liquid to be discharged toward the workpiece passes.

As exemplified in FIG. 8, the cartridge 10A may include a fixed shaft 55. The fixed shaft 55 may include a fluid passage through which the above-described fluid (for example, air, oil, or coolant liquid) flows. More specifically, the fixed shaft 55 may include a fluid passage through which fluid is supplied to the fluid passage 17, such as the first fluid passage 17a, which is provided in the rotation shaft 16. In the example illustrated in FIG. 8, an upper end portion of the fixed shaft 55 is provided between the inner ring 13 and the rotation shaft 16. In the example illustrated in FIG. 8, the inner ring 13 and the rotation shaft 16 rotate about the first axis AX1 relative to the fixed shaft 55. In the example illustrated in FIG. 8, the inner ring 13 is supported by the outer ring 51 so as to be rotatable, and the rotation shaft 16 is guided by the fixed shaft 55. This configuration makes the inner ring 13 and the rotation shaft 16 stably rotatable about the first axis AX1. The fixed shaft 55 may be fixed to the support component 41.

In the example illustrated in FIG. 9, the cartridge 10A includes a closing component 57. The closing component 57 is provided at a bottom wall 49w of the support component 41. The closing component 57 closes an opening 49h. The opening 49h is formed in the bottom wall 49w of the support component 41 (more specifically, the bottom wall 49w of a third support 49, described later). The closing component 57 may include an end plate 58. The end plate 58 is provided vertically under the rotation shaft 16.

In the example illustrated in FIG. 9, the closing component 57 is made up of a bottom portion 55w of the fixed shaft 55 and the end plate 58, which is fixed to the bottom portion 55w of the fixed shaft 55.

In the example illustrated in FIG. 9, ports 18 are provided at the closing component 57. The ports 18 are fluidally connected to the fluid passage 17.

More specifically, in the example illustrated in FIG. 9, a first port 18a is provided at the closing component 57. The first port 18a is fluidally connected to the first fluid passage 17a. Alternatively or additionally, a second port 18b may be provided at the closing component 57. The second port 18b is fluidally connected to the second fluid passage 17b. As exemplified in FIG. 10, a first tube 91a is connected to the first port 18a. The first tube 91a supplies working fluid to the first fluid passage 17a. An example of the first tube 91a is a flexible tube. As exemplified in FIG. 10, a second tube 91b is connected to the second port 18b.The second tube 91b supplies coolant liquid to the second fluid passage 17b. An example of the second tube 91b is a flexible tube.

The first motor 31 includes an output shaft 31a. In the example illustrated in FIG. 2, the output shaft 31a of the first motor 31 is parallel to the second axis AX2. Alternatively, as exemplified in FIG. 11, the output shaft 31a of the first motor 31 may be coaxial with the second axis AX2. Further alternatively, the output shaft of the first motor 31 may transfer motive power to the roller gear cam 21 via a bevel gear and other elements. In this case, the angle defined between the output shaft of the first motor 31 and the rotation axis of the roller gear cam 21 (the second axis AX2) is set to a predetermined angle (for example, 90 degrees).

In the example illustrated in FIG. 2, the cartridge 10A includes a plurality of gears 15. The plurality of gears 15 include a first gear 15a and a second gear 15b. The plurality of gears 15 are provided between the output shaft 31a of the first motor 31 and the roller gear cam 21. More specifically, the plurality of gears 15 receive motive power from the output shaft 31a of the first motor 31, and transmits the motive power to the roller gear cam 21.

The cartridge 10A may include an adjustment component 32. The adjustment component 32 adjusts the position of each gear 15 (more specifically, the first gear 15a). In the example illustrated in FIG. 2, the adjustment component 32 adjusts the position of the first gear 15a to adjust the amount of backlash between the first gear 15a and the second gear 15b. For example, the adjustment component 32 includes an eccentric ring 32r. In this case, by rotating the eccentric ring 32r about the output shaft 31a of the first motor 31, the position of the first gear 15a is adjusted. In this manner, the amount of backlash between the first gear 15a and the second gear 15b is adjusted.

The cartridge 10A may include a gear box 47g. The gear box 47g houses the gears 15, such as the first gear 15a. The gear box 47g may house the plurality of gears 15, which include the first gear 15a and the second gear 15b. As exemplified in FIG. 2, the gear box 47g (or a second support 47, described later) may include an opening 47h. Through the opening 47h, the adjustment component 32 is accessible. The cartridge 10A may also include a closing plate 48. The closing plate 48 covers the opening 47h.

### (Support Component 41)

In the example illustrated in FIG. 12, the support component 41 includes an oil chamber 41c. In the oil chamber 41c, oil is storable. In the oil chamber 41c, at least the bearings 14 or the protrusion 25 of the roller gear cam 21 are provided. In the oil chamber 41c, at least the bearings 14, the gears 15, or the protrusion 25 of the roller gear cam 21 may be provided. In the example illustrated in FIG. 12, the bearings 14 and the protrusion 25 of the roller gear cam 21 are provided in the oil chamber 41c. Also, the gears 15 are provided in the oil chamber 41c. In the example illustrated in FIG. 12, oil can be injected into the oil chamber 41c before the cartridge 10A is mounted on the tilt base 61. This configuration ensures that the presence and absence of a leakage of oil from the oil chamber 41c can be checked before the cartridge 10A is mounted on the tilt base 61. Before the cartridge 10A is mounted on the tilt base 61, oil may be injected into the oil chamber 41c; and also before the cartridge 10A is mounted on the tilt base 61, the roller gear cam 21 may be driven by the first motor 31. In this case, before the cartridge 10A is mounted on the tilt base 61, operation testing of the mechanism that includes the roller gear cam 21 can be performed.

In the example illustrated in FIG. 12, the oil chamber 41c includes a first chamber 411c. In the first chamber 411c, the bearings 14 and the protrusion 25 of the roller gear cam 21 are provided. The oil chamber 41c also includes a second chamber 412c. In the second chamber 412c, the gears 15 are provided. In the example illustrated in FIG. 12, the first chamber 411c and the second chamber 412c are fluidally connected to each other through a connection hole 410h. The connection hole 410h is formed in the support component 41. In the example illustrated in FIG. 12, the first chamber 411c is defined by a first support 45 and the third support 49, described later. Also in the example illustrated in FIG. 12, the second chamber 412c is defined by a second support 47, described later (more specifically, the gear box 47g).

In the example illustrated in FIG. 12, the first chamber 411c and the second chamber 412c are fluidally connected to each other, and each of the first chamber 411c and the second chamber 412c serves as a part of the oil chamber 41c. Alternatively, the first chamber 411c and the second chamber 412c may be fluidally isolated from each other, and oil may be stored only one of the first chamber 411c and the second chamber 412c. For example, among the bearings 14, the gears 15, and the protrusion 25 of the roller gear cam 21, only the bearings 14 and the protrusion 25 of the roller gear cam 21 may be provided in the oil chamber 41c. Alternatively, among the bearings 14, the gears 15, and the protrusion 25 of the roller gear cam 21, only the gears 15 may be provided in the oil chamber 41c.

As exemplified in FIG. 11, the second chamber may be omitted. In the example illustrated in FIG. 11, the bearings 14 and the protrusion 25 of the roller gear cam 21 are provided in the oil chamber 41c, whereas no gears are provided in the oil chamber 41c.

In the example illustrated in FIG. 3, the support component 41 includes a plate portion 42. The plate portion 42 is to be mounted on the tilt base 61. In the example illustrated in FIG. 3, the plate portion 42 extends in a direction approximately perpendicular to the first axis AX1. The plate portion 42 has a thickness direction that is substantially parallel to the first axis AX1. In this specification, the direction perpendicular to the first axis AX1 and extending along a longitudinal direction of the plate portion 42 is defined as third direction *DR3.* In the example illustrated in FIG. 5, the third direction *DR3* aligns with a direction that is perpendicular to the first axis AX1 and that extends from the first axis AX1 toward a wing portion 44, described later. Also in the example illustrated in FIG. 5, the third direction *DR3* aligns with a direction that is perpendicular to the first axis AX1 and that extends from the first axis AX1 toward a center portion of the roller gear cam 21 (more specifically, the center portion 23m of the gear shaft 23). In this specification, the direction opposite to the third direction *DR3* is defined as fourth direction *DR4.*

In the example illustrated in FIG. 5, the plate portion 42 has a width direction that is substantially parallel to the second direction *DR2* (in other words, the direction from the one end portion 23a of the gear shaft 23 toward the other end portion 23b of the gear shaft 23).

In the example illustrated in FIG. 5, in a view from a direction parallel to the first axis AX1, the cartridge 10A (more specifically, the plate portion 42) has an elongate shape (more specifically, an approximately rectangular shape). In the example illustrated in FIG. 5, a value obtained by dividing a length dimension *L1* of the plate portion 42 by a width dimension *W1* of the plate portion 42 (that is, *L1*/*W1*) is 1.2 or more, 1.3 or more, or 1.4 or more. Also, the value obtained by dividing the length dimension *L1* of the plate portion 42 by the width dimension *W1* of the plate portion 42 (that is, *L1*/*W1*) is 1.5 or less, 2 or less, or 2.5 or less.

In the example illustrated in FIG. 5, distance *L2* is a direction from the first axis AX1 to an end of the plate portion 42 in the third direction *DR3*, and distance *L3* is a direction from the first axis AX1 to an end of the plate portion 42 in the fourth direction *DR4.* The distance *L2* is greater than the distance *L3*. A value obtained by dividing the distance *L2*, which is from the first axis AX1 to the end of the plate portion 42 in the third direction *DR3*, by the distance *L3*, which is from the first axis AX1 to the end of the plate portion 42 in the fourth direction *DR4* (that is, *L2*/*L3*) is, for example, 1.5 or more, 2 or more, or 2.5 or more. The configuration in which the distance *L2* is greater ensures that the first motor 31 and surrounding elements can be provided under a portion of the plate portion 42 in the third direction *DR3* (the wing portion 44, described later). Also, the configuration in which the distance *L3* is smaller prevents the size of the plate portion 42 from being excessively large.

In the example illustrated in FIG. 13, the plate portion 42 includes a main portion 43 and the wing portion 44. The main portion 43 defines a hole portion 43h. In the hole portion 43h, the rotation body 11 is inserted. The wing portion 44 covers the first motor 31. In the example illustrated in FIG. 13, the wing portion 44 is provided further in the third direction *DR3* than the main portion 43. In the example illustrated in FIG. 13, the plate portion 42 includes the hole portion 43h. The hole portion 43h has a circular shape. In the hole portion 43h, the rotation body 11 is inserted.

In the examples illustrated in FIGs. 3 and 4, an outer circumference portion of the plate portion 42 is placed on an edge portion 641 of the housing 64. More specifically, the outer circumference portion of the plate portion 42 has a rectangular shape, and the housing 64 has a rectangular shape. The rectangular outer circumference portion of the plate portion 42 is placed on the rectangular edge portion 641 of the housing 64. In the example illustrated in FIG. 13, the plate portion 42 includes free end portions 42f on all four sides. The free end portions 42f are placed on the edge portion 641 of the housing 64 (see FIG. 3).

In the example illustrated in FIG. 3, the support component 41 includes the first support 45. The first support 45 protrudes downward from the plate portion 42. More specifically, the first support 45 of the support component 41 protrudes in the first direction *DR1* from the plate portion 42. The first support 45 supports the roller gear cam 21. The first support 45 protrudes from the plate portion 42 toward a bottom portion 61w of the tilt base 61.

The first support 45 and the plate portion 42 may be connected by integral molding. In this case, no gap forms at the connection portion at which the plate portion 42 and the first support 45 are connected, ensuring that no or minimal oil leaks from the oil chamber 41c through the connection portion. Alternatively, the first support 45 may be fixed to the plate portion 42 via a fastener.

In the example illustrated in FIG. 3, the first support 45 has a cylindrical shape extending along the second axis AX2. The roller gear cam 21 is provided in the internal space of the first support 45.

In the example illustrated in FIG. 7, an opening 45h is formed at an end of the first support 45 in the second direction *DR2.* The opening 45h is closed by a closing assembly 46. The closing assembly 46 includes a lid component 461. In the example illustrated in FIG. 7, the closing assembly 46 includes the lid component 461 and the lock component 27, described earlier. In the example illustrated in FIG. 7, the closing assembly 46, which includes the lock component 27, is removable from the opening 45h. Also in the example illustrated in FIG. 7, the lid component 461 is removable from the closing assembly 46, which includes the lock component 27.

In the example illustrated in FIG. 3, the support component 41 includes the second support 47. The second support 47 protrudes downward from the plate portion 42 (more specifically, the wing portion 44). More specifically, the second support 47 of the support component 41 protrudes in the first direction *DR1* from the plate portion 42 (more specifically, the wing portion 44). The second support 47 supports the first motor 31. The second support 47 protrudes from the plate portion 42 (more specifically, the wing portion 44) toward the bottom portion 61w of the tilt base 61.

The second support 47 and the plate portion 42 may be connected by integral molding. In this case, no gap forms at the connection portion at which the plate portion 42 and the second support 47 are connected, ensuring that no or minimal oil leaks from the oil chamber 41c through the connection portion. Alternatively, the second support 47 may be fixed to the plate portion 42 via a fastener.

The second support 47 may include at least a part of the gear box 47g, which houses the gears 15, such as the first gear 15a.

In the example illustrated in FIG. 3, the support component 41 includes the third support 49. The third support 49 protrudes downward from the plate portion 42 (more specifically, the main portion 43). More specifically, the third support 49 of the support component 41 protrudes in the first direction *DR1* from the plate portion 42 (more specifically, the main portion 43). The third support 49 supports the rotation body 11. The third support 49 protrudes from the plate portion 42 (more specifically, the main portion 43) toward the bottom portion 61w of the tilt base 61.

The third support 49 and the plate portion 42 may be connected by integral molding. In this case, no gap forms at the connection portion at which the plate portion 42 and the third support 49 are connected, ensuring that no or minimal oil leaks from the oil chamber 41c through the connection portion. Alternatively, the third support 49 may be fixed to the plate portion 42 via a fastener.

In the example illustrated in FIG. 13, the third support 49 has a cylindrical shape extending along the first axis AX1. In the example illustrated in FIG. 13, the third support 49 includes a cylindrical side wall 49s and a bottom wall 49w. The cylindrical side wall 49s may include an upper cylindrical side wall 491s, a lower cylindrical side wall 492s, and a stepped portion 493s. The stepped portion 493s connects the upper cylindrical side wall 491s and the lower cylindrical side wall 492s. In the example illustrated in FIG. 8, the outer ring 51 is provided immediately over the stepped portion 493s, so that the stepped portion 493s supports the outer ring 51.

A majority part of the rotation body 11 is provided in a space SP. The space SP is defined by the cylindrical side wall 49s and the bottom wall 49w. In the example illustrated in FIG. 13, the opening 49h is formed in the bottom wall 49w of the third support 49. The opening 49h is closed by the closing component 57 (see FIG. 9).

### (Table Rotator 1A)

In the example illustrated in FIG. 14, the table rotator 1A includes a table 95, in addition to the cartridge 10A and the tilt base 61. The table 95 supports the workpiece. In the example illustrated in FIG. 15, the table rotator 1A includes a support base 71 and a second motor 73. The support base 71 supports the tilt base 61 so as to be tiltable about the tilt axis AT. The second motor 73 tilts the tilt base 61. In the example illustrated in FIG. 15, the tilt axis AT is substantially parallel to a horizontal plane. Also, the tilt axis AT is substantially parallel to the third direction *DR3.* In the example illustrated in FIG. 15, the support base 71 includes a first support base 71a and a second support base 71b. The first support base 71a supports a first end portion 62a of the tilt base 61. The second support base 71b supports a second end portion 62b (see FIG. 14) of the tilt base 61.

As exemplified in FIG. 15, the first end portion 62a of the tilt base 61 is supported by the first support base 71a so as to be tiltable about the tilt axis AT. The second end portion 62b (see FIG. 14) of the tilt base 61 is supported by the second support base 71b so as to be tiltable about the tilt axis AT. In the example illustrated in FIG. 15, in a state in which the first axis AX1 is substantially parallel to a vertical direction, the entirety of the cartridge 10A is provided below the tilt axis AT. The tilt base 61 may have an overall boat-shaped form.

In the example illustrated in FIG. 3, the tilt base 61 includes the first end portion 62a, the second end portion 62b, and the housing 64. The housing 64 defines the depressed portion 63. The housing 64 is provided between the first end portion 62a and the second end portion 62b in a direction along the tilt axis AT.

In the examples illustrated in FIGs. 3 and 4, the depressed portion 63 of the tilt base 61 (more specifically, the housing 64) receives the roller gear cam 21, the first motor 31, and the rotation body 11. More specifically, the entirety of the roller gear cam 21, the entirety of the first motor 31, and a majority part of the rotation body 11 (more specifically, the portion of the rotation body 11 with the mounting portion 12 removed) are inserted in the depressed portion 63 of the tilt base 61 (more specifically, the housing 64). In the examples illustrated in FIGs. 3 and 4, the depressed portion 63 of the tilt base 61 (more specifically, the housing 64) receives the first support 45 of the support component 41, the second support 47 of the support component 41, and the third support 49 of the support component 41.

In the example illustrated in FIG. 3, the tilt base 61 (more specifically, the housing 64) includes a main opening 64h. The main opening 64h is blocked by the cartridge 10A. In the examples illustrated in FIGs. 3 and 4, by mounting the cartridge 10A on the tilt base 61, the plate portion 42 of the support component 41 serves as a top plate that covers the main opening 64h. Under the top plate, at least the first motor 31 is provided.

In the example illustrated in FIG. 3, the main opening 64h is defined by the edge portion 641 of the housing 64 (more specifically, the rectangular edge portion 641). The edge portion 641 contacts a lower surface of the cartridge 10A (more specifically, a lower surface of the plate portion 42). An outer circumference portion of the cartridge 10A (more specifically, the outer circumference portion of the plate portion 42) may be fitted with the edge portion 641 of the housing 64. In the example illustrated in FIG. 3, the edge portion 641 of the housing 64 is provided with protrusions 641p. The protrusions 641p are fitted with respective depressions 42d (see FIG. 5). The depressions 42d are formed in the outer circumference portion of the plate portion 42. Alternatively, depressions formed in the edge portion 641 of the housing 64 may be fitted with respective protrusions formed on the outer circumference portion of the plate portion 42.

In the example illustrated in FIG. 3, the edge portion 641 is connected to an apex surface 64u of the housing 64 via a stepped surface 642. The stepped surface 642 faces an outer circumferential surface of the plate portion 42 of the cartridge 10A in a state in which the cartridge 10A is mounted on the tilt base 61.

As exemplified in FIG. 4, in a state in which the cartridge 10A is mounted on the tilt base 61, an upper surface 42u of the plate portion 42 may be substantially flush with the apex surface 64u of the housing 64.

### (Subordinate Openings OP)

In the example illustrated in FIG. 16, the tilt base 61 (more specifically, the housing 64) includes subordinate openings OP. The subordinate openings OP are different from the main opening 64h. More specifically, the tilt base 61 (more specifically, the housing 64) includes a first opening OP1, a second opening OP2, a third opening OP3, and/or a fourth opening OP4.

In the example illustrated in FIG. 16, the subordinate openings OP include the first opening OP1. As exemplified in FIG. 17, through the first opening OP1, the first motor 31 is accessible. The first opening OP1 has a size that permits the first motor 31 to pass through. In this case, in the event of failure of the first motor 31, a worker (for example, a maintenance engineer) is able to change the first motor 31 with another first motor through the first opening OP1. This configuration ensures that in the event of failure of the first motor 31, it is not necessary to remove the entirety of the cartridge 10A from the tilt base 61.

In the example illustrated in FIG. 17, the first opening OP1 is provided in a bottom portion 64w of the tilt base 61 (more specifically, the housing 64). As exemplified in FIG. 18, the tilt base 61 preferably includes a first cover CA1. The first cover CA1 covers the first opening OP1. In a case that the first opening OP1 is covered by the first cover CA1, entry of dust or liquid, such as coolant, to the inside of the housing 64 through the first opening OP1 is prevented or restricted. It is to be noted that the first cover CA1 may be provided with an oil replacement drain. In the examples illustrated in FIGs. 17 and 18, in a state in which the first cover CA1 is mounted on the housing 64, the first cover CA1 is provided to directly face the first motor 31. By merely removing the first cover CA1 from the housing 64, the first motor 31 can be exposed so that the first motor 31 is visually recognizable by the worker.

The size of the first opening OP1 is preferably smaller than the size of the main opening 64h, which is blocked by the cartridge 10A. The configuration in which the size of the first opening OP1 is smaller prevents degradation of the rigidity of the housing 64.

In the example illustrated in FIG. 10, the first motor 31 is connected with a feeding cable CB1. A first encoder 31n of the first motor 31 is connected with a signal cable CB2. The feeding cable CB1 and/or the signal cable CB2 are provided to pass through a hole portion 62h. The hole portion 62h is formed in the first end portion 62a of the tilt base 61.

The connection of the feeding cable CB1 and/or the signal cable CB2 to the first motor 31 is performed, for example, after the cartridge 10A has been placed on the tilt base 61 (more specifically, after the cartridge 10A has been mounted on the tilt base 61). In other words, the feeding cable CB1 and/or the signal cable CB2 are attached to the first motor 31 that is provided inside the housing 64. The work of connecting the feeding cable CB1 and/or the signal cable CB2 to the first motor 31 may be performed through the first opening OP1. In other words, in a state in which the worker's hand is inserted in the housing 64 through the first opening OP1, the worker is able to connect, to the first motor 31, the feeding cable CB1 and/or the signal cable CB2 that have been passed through the hole portion 62h, which is formed in the first end portion 62a of the tilt base 61. The work of connecting the feeding cable CB1 and/or the signal cable CB2 to the first motor 31 may be performed in a state in which the tilt base 61 is tilted relative to the support base 71 so that the bottom portion 64w of the tilt base 61 is oriented laterally.

In the example illustrated in FIG. 16, the subordinate openings OP includes the second opening OP2. As exemplified in FIG. 17, through the second opening OP2, the closing component 57 is accessible. The closing component 57 closes the opening 49h, which is formed in the bottom wall 49w of the support component 41. In the example illustrated in FIG. 17, the first port 18a is provided at the closing component 57. The first port 18a is fluidally connected to the first fluid passage 17a (see FIG. 9). The worker (for example, a maintenance engineer) is able to: make access to the first port 18a through the second opening OP2; and perform the work of connecting the first tube 91a (see FIG. 10) to the first port 18a through the second opening OP2. In the example illustrated in FIG. 17, the second port 18b is provided at the closing component 57. The second port 18b is fluidally connected to the second fluid passage 17b. The worker (for example, a maintenance engineer) is able to: make access to the second port 18b through the second opening OP2; and perform the work of connecting the second tube 91b (see FIG. 10) to the second port 18b through the second opening OP2. The work of connecting the first tube 91a to the first port 18a and/or the work of connecting the second tube 91b to the second port 18b may be performed in a state in which the tilt base 61 is tilted relative to the support base 71 so that the bottom portion 64w of the tilt base 61 is oriented laterally.

In the example illustrated in FIG. 17, the second opening OP2 is provided in the bottom portion 64w of the tilt base 61 (more specifically, the housing 64). As exemplified in FIG. 18, the tilt base 61 preferably includes a second cover CA2. The second cover CA2 covers the second opening OP2. In a case that the second opening OP2 is covered by the second cover CA2, entry of dust or liquid, such as coolant, to the inside of the housing 64 through the second opening OP2 is prevented or restricted. It is to be noted that the second cover CA2 may be provided with an oil replacement drain. In the examples illustrated in FIGs. 17 and 18, in a state in which the second cover CA2 is mounted on the housing 64, the second cover CA2 is provided to directly face the closing component 57.

The size of the second opening OP2 is preferably smaller than the size of the main opening 64h. The configuration in which the size of the second opening OP2 is smaller prevents degradation of the rigidity of the housing 64. In the example illustrated in FIG. 16, the second opening OP2 is provided independently of the first opening OP1. This configuration prevents degradation of the rigidity of the housing 64 as compared with a case that a large single opening is provided. In the example illustrated in FIG. 16, the second opening OP2 and the first opening OP1 are partitioned by a bridge portion 69b. The bridge portion 69b connects a first side wall 645a of the housing 64 to a second side wall 645b of the housing 64. The second side wall 645b is provided to face the first side wall 645a. The bottom portion 64w of the tilt base 61 may be implemented by a frame structure 69. The frame structure 69 defines a plurality of openings including the first opening OP1 and the second opening OP2. In the example illustrated in FIG. 16, a part of the frame structure 69 constitutes the bridge portion 69b.

In the example illustrated in FIG. 16, the second opening OP2 is provided to abut on the first opening OP1. In this case, by removing the first cover CA1 and the second cover CA2 from the housing 64, the worker (for example, a maintenance engineer) is able to make access to the internal space of the housing 64 through both the first opening OP1 and the second opening OP2. This configuration ensures that, in the example illustrated in FIG. 17, the first tube 91a (or the second tube 91b) that has been passed through the hole portion 62h (which is formed in the first end portion 62a of the tilt base 61) can be easily moved toward the first port 18a (or the second port 18b).

Another opening OP5 may be provided in the bottom portion 64w of the housing 64. The opening OP5 is provided to abut on the second opening OP2.

In the example illustrated in FIG. 2, the cartridge 10A includes the gears 15 (more specifically, the first gear 15a and the second gear 15b). The gears 15 transmit the motive power of the first motor 31 to the roller gear cam 21. In the example illustrated in FIG. 16, the subordinate openings OP include the third opening OP3. In the example illustrated in FIG. 19, through the third opening OP3, the gears 15 are accessible (more specifically, the first gear 15a and the second gear 15b). In this case, the worker (for example, a maintenance engineer) is able to check the amount of backlash between the gears (more specifically, the amount of backlash between the first gear 15a and the second gear 15b) through the third opening OP3. The worker (for example, a maintenance engineer) is also able to change a gear 15 with another gear through the third opening OP3. This configuration ensures that in checking the amount of backlash (or in changing the gears 15), it is not necessary to remove the entirety of the cartridge 10A from the tilt base 61.

In the example illustrated in FIG. 19, through the third opening OP3, the adjustment component 32 is accessible, which adjusts the position of each gear 15 (more specifically, the first gear 15a). In this case, the worker (for example, a maintenance engineer) is able to operate the adjustment component 32 through the third opening OP3 to adjust the position of each gear 15 (more specifically, the first gear 15a). This configuration ensures that in adjusting the position of each gear 15 (more specifically, in adjusting the amount of backlash between the first gear 15a and the second gear 15b), it is not necessary to remove the entirety of the cartridge 10A from the tilt base 61.

In the example illustrated in FIG. 20, through the third opening OP3, the closing plate 48 is accessible, which covers the opening 47h of the gear box 47g. In the examples illustrated in FIGs. 20 and 21, the tilt base 61 includes a third cover CA3. The third cover CA3 covers the third opening OP3. Also, in a state in which the third cover CA3 is mounted on the housing 64, the third cover CA3 is provided to directly face the closing plate 48. In the examples illustrated in FIGs. 19 to 21, in a case that the worker adjusts the position of each gear 15, the worker removes the third cover CA3 and the closing plate 48. Then, by operating the adjustment component 32, the worker is able to adjust the position of each gear 15. More specifically, by operating the adjustment component 32, the worker is able to adjust the position of each gear 15 in a direction perpendicular to the output shaft 31a of the first motor 31.

In the example illustrated in FIG. 20, the third opening OP3 is provided in a side wall 645 (more specifically, the first side wall 645a) of the tilt base 61 (more specifically, the housing 64). As exemplified in FIG. 21, the third cover CA3 is attachable to the side wall 645 (more specifically, the first side wall 645a). In a case that the third opening OP3 is covered by the third cover CA3, entry of dust or liquid, such as coolant, to the inside of the housing 64 through the third opening OP3 is prevented or restricted. The third cover CA3 has, for example, an approximately circular shape.

The size of the third opening OP3 is preferably smaller than the size of the main opening 64h. The configuration in which the size of the third opening OP3 is smaller prevents degradation of the rigidity of the housing 64.

In the example illustrated in FIG. 2, the cartridge 10A includes the lock component 27. The lock component 27 locks the rotation of the roller gear cam 21. In the example illustrated in FIG. 16, the subordinate openings OP include the fourth opening OP4. In the example illustrated in FIG. 22, through the fourth opening OP4, the lock component 27 is accessible. In the event of failure of the lock component 27, the worker (for example, a maintenance engineer) is able to change the lock component 27 with another lock component through the fourth opening OP4. This configuration ensures that in the event of failure of the lock component 27, it is not necessary to remove the entirety of the cartridge 10A from the tilt base 61.

In the example illustrated in FIG. 23, through the fourth opening OP4, the closing assembly 46 is accessible. The closing assembly 46 closes the opening 45h (see FIG. 7), which is formed in an end portion of the first support 45. The closing assembly 46 includes the lid component 461. In the examples illustrated in FIGs. 23 and 24, the tilt base 61 includes a fourth cover CA4. The fourth cover CA4 covers the fourth opening OP4. In a state in which the fourth cover CA4 is mounted on the housing 64, the fourth cover CA4 is provided to directly face the closing assembly 46 (more specifically, the lid component 461). In the examples illustrated in FIGs. 22 to 24, in a case that the worker changes the lock component 27, the worker removes the fourth cover CA4. Then, the worker is able to change the lock component 27 with another lock component. In the examples illustrated in FIGs. 11 and 12, the lock component 27 is provided outside the oil chamber 41c. This configuration ensures that the lock component 27 can be changed with another lock component without discharging oil from the oil chamber 41c (more specifically, in a state in which oil is stored in the oil chamber 41c). The above configuration, in which the lock component 27 is provided outside the oil chamber 41c, also provides a high degree of flexibility in the posture of the tilt base 61 at the time of changing the lock component 27 with another lock component. In other words, the tilt base 61 is tilted to make the posture of the tilt base 61 suitable for the changing work. Then, the worker can easily perform the work of changing the lock component 27.

In the example illustrated in FIG. 23, the fourth opening OP4 is provided in the side wall 645 (more specifically, the second side wall 645b) of the tilt base 61 (more specifically, the housing 64). As exemplified in FIG. 24, the fourth cover CA4 is attachable to the side wall 645 (more specifically, the second side wall 645b). In a case that the fourth opening OP4 is covered by the fourth cover CA4, entry of dust or liquid, such as coolant, to the inside of the housing 64 through the fourth opening OP4 is prevented or restricted. The fourth cover CA4 has, for example, an approximately circular shape.

The size of the fourth opening OP4 is preferably smaller than the size of the main opening 64h. The configuration in which the size of the fourth opening OP4 is smaller prevents degradation of the rigidity of the housing 64.

In the example illustrated in FIG. 2, the cartridge 10A includes the gear 15, the adjustment component 32, and the lock component 27. In the examples illustrated in FIGs. 16 to 24, the tilt base 61 (more specifically, the housing 64) includes covers CA. The covers CA cover the respective subordinate openings OP. In a state in which the covers CA are removed from the subordinate openings OP, at least one of the first motor 31, the gear 15, the adjustment component 32, or the lock component 27 is visually recognizable from outside the tilt base 61 through the subordinate openings OP. This configuration enables the worker to check states of these elements from outside the tilt base 61 through the subordinate openings OP. The above configuration also enables the worker to perform maintenance of these elements, as necessary.

In the examples illustrated in FIGs. 16 to 24, the plurality of subordinate openings OP permit access to: the first motor 31; the gears 15, which transmit the motive power of the first motor 31 to the roller gear cam 21; the adjustment component 32, which adjusts the position of each gear 15; and the lock component 27, which locks the rotation of the roller gear cam 21. This configuration enables the worker to perform maintenance of these elements through the plurality of subordinate openings OP. For example, by removing the covers CA from the housing 64, the first motor 31 can be changed, each gear 15 can be changed, the position of each gear 15 can be adjusted, or the lock component 27 can be changed. In this case, it is not necessary to remove the entirety of the cartridge 10A from the tilt base 61 to change the first motor 31, change each gear 15, adjust the position of each gear 15, or change the lock component 27.

### (Oil Check)

In the example illustrated in FIG. 25, the cartridge 10A (more specifically, the support component 41) includes a first through hole 41h. The first through hole 41h is fluidally connected to the oil chamber 41c. The tilt base 61 (more specifically, the side wall 645 of the tilt base 61) may include a second through hole 645h. In a state in which the cartridge 10A is mounted on the tilt base 61, the first through hole 41h is provided at a position aligned with the second through hole 645h. The table rotator 1A may include a first closing component 93a. The first closing component 93a is inserted in the second through hole 645h and covers the first through hole 41h.

As exemplified in FIG. 25, at least a part of the first closing component 93a may be implemented by a transparent component 931a. Through the transparent component 931a, oil is visually recognizable. More specifically, at least a part of the first closing component 93a may be implemented by the transparent component 931a so that it is possible to visually recognize whether a sufficient amount of oil is stored in the oil chamber 41c. In this case, by looking at the first closing component 93a from outside the tilt base 61, the worker is able to check whether a sufficient amount of oil is stored in the oil chamber 41c.

When the roller gear cam 21 of the cartridge 10A is inserted into the depressed portion 63 of the tilt base 61, the first closing component 93a is not mounted on the cartridge 10A. When the roller gear cam 21 of the cartridge 10A is inserted into the depressed portion 63 of the tilt base 61, the first through hole 41h is preferably blocked by a second closing component 93b (see FIG. 26). The second closing component 93b is different from the first closing component 93a. In other words, the cartridge 10A preferably includes the second closing component 93b, which covers the first through hole 41h.

In a state in which oil is stored in the oil chamber 41c, the roller gear cam 21 of the cartridge 10A may be inserted in the depressed portion 63 of the tilt base 61. In a case that the first through hole 41h is blocked by the second closing component 93b, a leakage of the oil in the oil chamber 41c to outside the cartridge 10A through the first through hole 41h is prevented at the time of the insertion.

After the cartridge 10A is mounted on the tilt base 61, the second closing component 93b is changed with the first closing component 93a. This changing is preferably performed in a state in which the position of the first through hole 41h and the position of the second through hole 645h are higher than the position of the oil chamber 41c. More specifically, (1) the tilt base 61 is tilted about the tilt axis AT relative to the support base 71 to make the position of the first through hole 41h and the position of the second through hole 645h higher than the position of the oil chamber 41c, (2) the second closing component 93b is removed from the cartridge 10A, (3) the first closing component 93a is inserted into the second through hole 645h, and (4) the first closing component 93a is mounted onto the cartridge 10A to make the first closing component 93a close the first through hole 41h.

The first through hole 41h may function as an injection port through which to inject oil into the oil chamber 41c and/or as a discharge port through which to discharge oil from the oil chamber 41c. Alternatively, the cartridge 10A may include an injection port which is different from the first through hole 41h and through which to inject oil into the oil chamber 41c. The cartridge 10A may also include a discharge port which is different from the first through hole 41h and through which to discharge oil from the oil chamber 41c.

In the example illustrated in FIG. 4, the cartridge 10A is removable from the tilt base 61. More specifically, the cartridge 10A is removable from the tilt base 61 in a state in which the rotation body 11, the roller gear cam 21, and the first motor 31 are supported by the support component 41. This configuration ensures that in the event of, for example, damage to the roller gear cam 21, the cartridge 10A can easily be changed with another cartridge. The above configuration also ensures that when the cartridge 10 is changed with another cartridge, it is not necessary to remove the tilt base 61 from the support base 71 (see FIG. 15).

### (Second Embodiment)

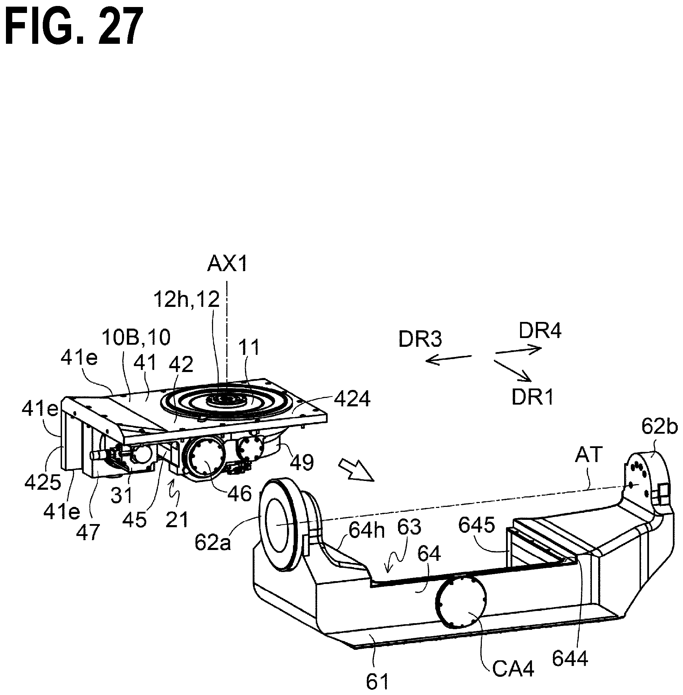

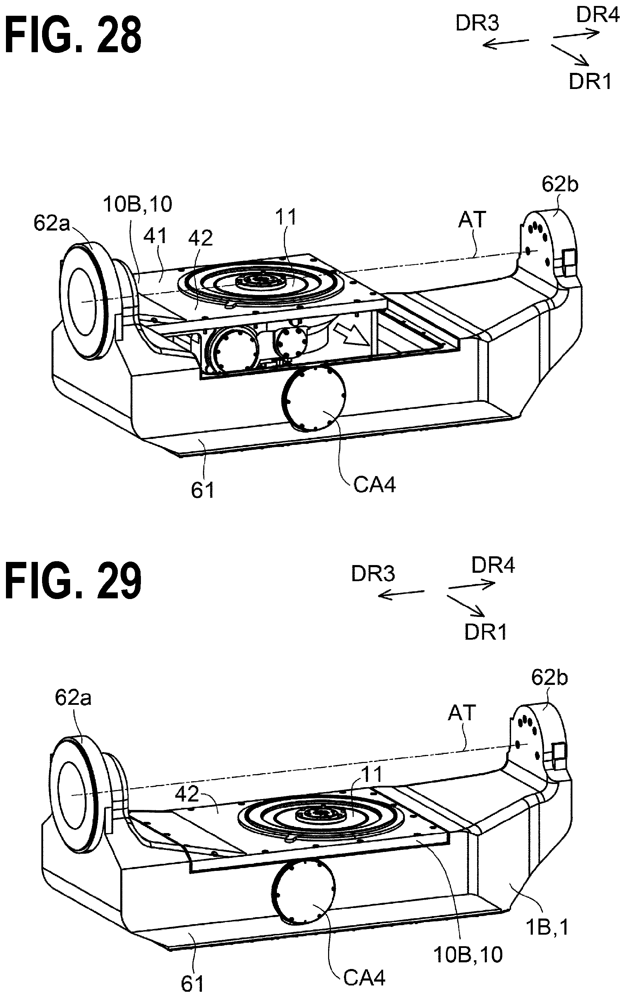

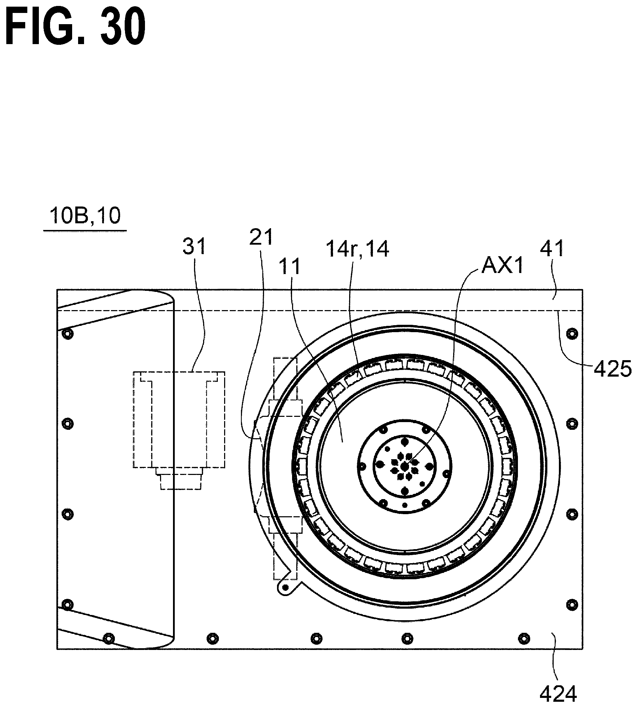

By referring to FIGs. 27 to 30, a cartridge 10B according to the second embodiment and a table rotator 1B according to the second embodiment will be described. FIGs. 27 and 28 are each a schematic perspective view of the cartridge 10B according to the second embodiment, illustrating how the cartridge 10A is mounted on the tilt base 61. FIG. 29 is a schematic perspective view of the cartridge 10B according to the second embodiment, illustrating a state in which the cartridge 10A is mounted on the tilt base 61. FIG. 30 is a schematic top view of the cartridge 10B according to the second embodiment. It is to be noted that in FIG. 30, to make the position of each of the first motor 31, the roller gear cam 21, and the each bearing 14 easily recognizable, the first motor 31, the roller gear cam 21, and the bearing 14 are schematically indicated by broken lines.

The following description of the second embodiment will mainly focus on those respects in which the second embodiment is different from the first embodiment. In contrast, those respects already described in the first embodiment will not be described in the second embodiment to avoid a repetition of description. Thus, it will be readily appreciated that those respects that are not explicitly described in the second embodiment but are described in the first embodiment also apply in the second embodiment.

As exemplified in FIGs. 27 and 30, the cartridge 10B according to the second embodiment includes (1) the rotation body 11, which includes the bearings 14 and the mounting portion 12, on which a table that supports a workpiece is mounted, the rotation body 11 being rotatable about the first axis AX1, (2) the roller gear cam 21 (see FIG. 30), which transfers drive power to the bearings 14 to rotate the rotation body 11 about the first axis AX1, (3) the first motor 31, which drives the roller gear cam 21, and (4) the support component 41, which is mountable on the tilt base 61, which is tiltable about the tilt axis AT, in a state in which the support component 41 is supporting the rotation body 11, the roller gear cam 21, and the first motor 31.

As exemplified in FIG. 29, the table rotator 1B according to the second embodiment includes the cartridge 10B and the tilt base 61, which is tiltable about the tilt axis AT. As exemplified in FIG. 27, the tilt base 61 includes the depressed portion 63, which receives the roller gear cam 21, the first motor 31, and the rotation body 11. The insertion direction in which the roller gear cam 21 is inserted into the depressed portion 63 is defined as the first direction *DR1.* In this case, in a view from a direction along the first direction *DR1*, the rotation body 11, the roller gear cam 21, and the first motor 31 are provided inward of the outer circumferential edge 41e of the support component 41.

With this configuration, the cartridge 10B according to the second embodiment and the table rotator 1B according to the second embodiment provide effects similar to the effects provided by the cartridge 10A according to the first embodiment and the table rotator 1A according to the first embodiment.

In the examples illustrated in FIGs. 27 and 28, the first direction *DR1* is a direction substantially perpendicular to the first axis AX1. In the example illustrated in FIG. 27, the main opening 64h of the tilt base 61, which main opening 64h is blocked by the cartridge 10B, is formed across an upper part 644 of the housing 64 and the side wall 645 of the housing 64. The support component 41 of the cartridge 10B includes a first plate portion 424 and a second plate portion 425. The first plate portion 424 is mounted on the upper part 644 of the housing 64. The second plate portion 425 is mounted on the side wall 645 of the housing 64.

### (Third Embodiment)

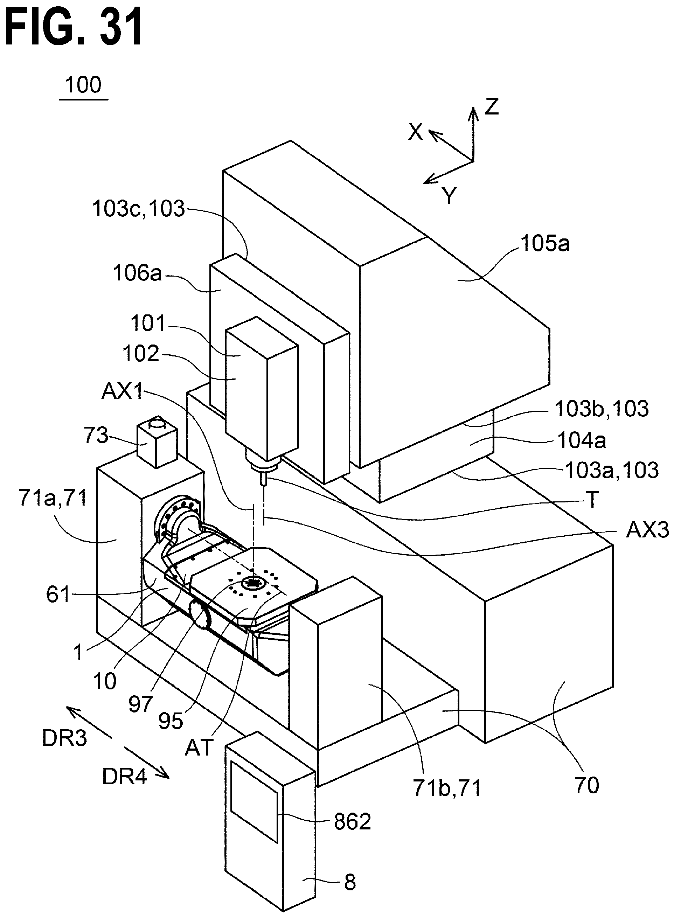

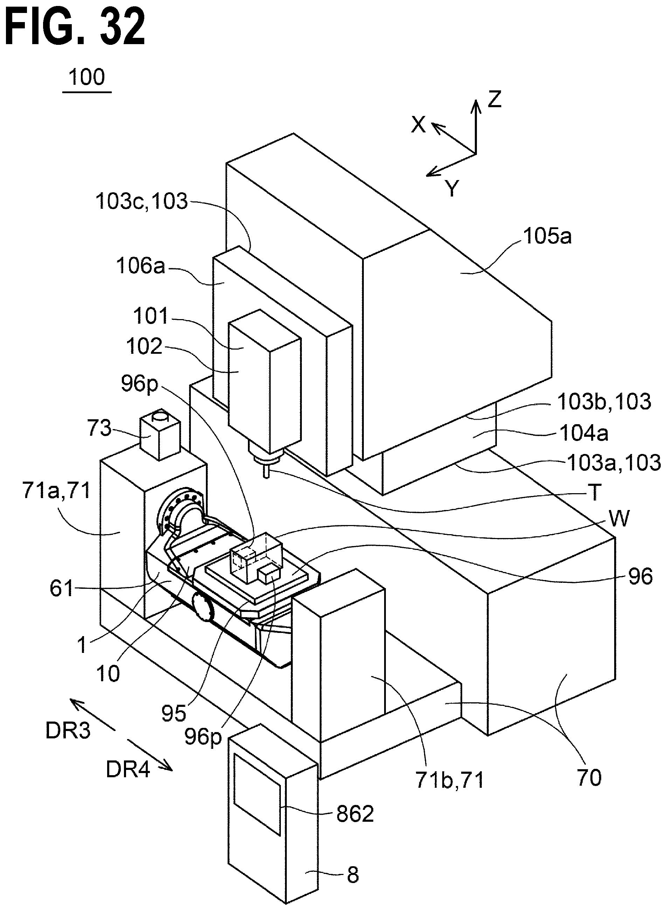

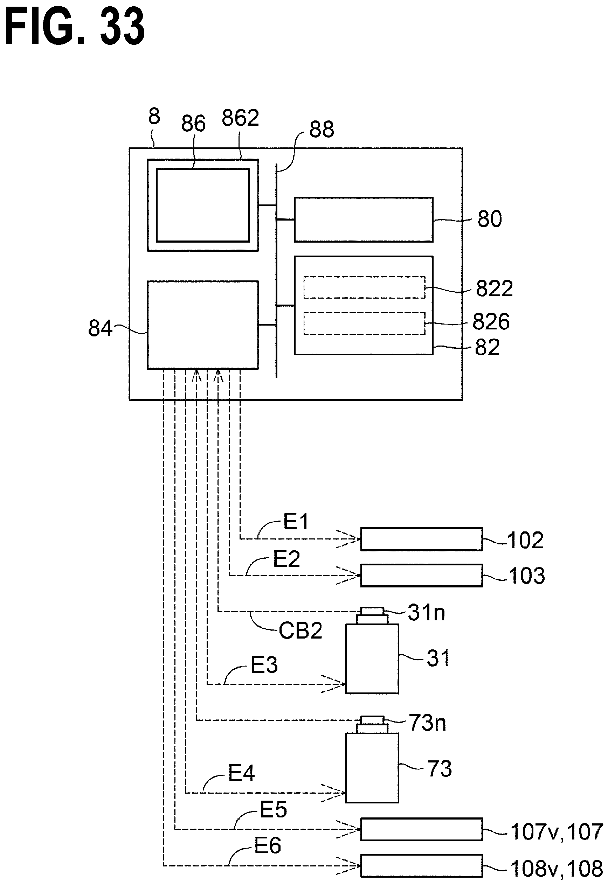

By referring to FIGs. 1 to 33, a machine tool 100 according to the third embodiment will be described. FIGs. 31 and 32 are each a schematic perspective view of the machine tool 100 according to the third embodiment. FIG. 33 is a schematic illustration of how a controller 8 is capable of controlling a plurality of control target instruments.

The following description of the third embodiment will mainly focus on those respects in which the third embodiment is different from the first and second embodiments. In contrast, those respects already described in the first or second embodiment will not be described in the third embodiment to avoid a repetition of description. Thus, it will be readily appreciated that those respects that are not explicitly described in the third embodiment but are described in the first embodiment or the second embodiment apply in the third embodiment. In contrast, all respects described in the third embodiment are applicable to the first and second embodiments.

As exemplified in FIG. 31, the machine tool 100 according to the third embodiment includes a machining head 101, a mover 103, the table rotator 1, and the controller 8.

As exemplified in FIG. 32, the machining head 101 supports a tool T. The tool T machines the workpiece W. The machining head 101 includes a rotational driver 102. The rotational driver 102 rotates the tool T. More specifically, the rotational driver 102 rotates the tool T about a third axis AX3 (see FIG. 31). The third axis AX3 extends along a tool longitudinal direction of the tool T.

The mover 103 moves the machining head 101 relative to the workpiece. The mover 103 may be a device capable of moving the machining head 101 one-dimensionally, two-dimensionally, or three-dimensionally.

The table rotator 1 may be the table rotator 1A according to the first embodiment, the table rotator 1B according to the second embodiment, or another table rotator.

The table rotator 1 includes (1) the table 95, which supports the workpiece W, (2) the cartridge 10, which includes the first motor 31, (3) the tilt base 61, (4) the support base 71, which supports the tilt base 61 so as to be tiltable, and (5) the second motor 73, which tilts the tilt base 61 about the tilt axis AT relative to the support base 71. The cartridge 10 may be the cartridge 10A according to the first embodiment, the cartridge 10B according to the second embodiment, or another cartridge. The table 95, the cartridge 10, the tilt base 61, the support base 71, and the second motor 73 have already been described in the first or second embodiment, and a description of these configurations will be omitted where otherwise a repetition of description occurs.

As exemplified in FIGs. 1 and 2, the cartridge 10 includes (1) the rotation body 11, which includes the bearings 14 and the mounting portion 12, on which the table 95 is mounted, the rotation body 11 being rotatable about the first axis AX1, (2) the roller gear cam 21, which transfers drive power to the bearing 14 to rotate the rotation body 11 about the first axis AX1, (3) the first motor 31, which drives the roller gear cam 21, and (4) the support component 41, which is mountable on the tilt base 61 in a state in which the support component 41 is supporting the rotation body 11, the roller gear cam 21, and the first motor 31.

As exemplified in FIG. 3, the tilt base 61 includes the depressed portion 63, which receives the roller gear cam 21, the first motor 31, and the rotation body 11. As exemplified in FIGs. 3 to 5, the insertion direction in which the roller gear cam 21 is inserted into the depressed portion 63 is defined as the first direction *DR1.* In this case, in a view from a direction along the first direction *DR1*, the rotation body 11, the roller gear cam 21, and the first motor 31 are provided inward of the outer circumferential edge 41e of the support component 41 (more specifically, inward of the outer circumferential edge 41e of the plate portion 42 in a view from a direction along the first direction *DR1*). In the example illustrated in FIG. 5, in the view from a direction along the first axis AX1, the rotation body 11, the roller gear cam 21, and the first motor 31 are provided inward of the outer circumferential edge 41e of the support component 41 (more specifically, inward of the outer circumferential edge 41e of the plate portion 42 in the view from a direction along the first axis AX1).

The controller 8 controls the rotational driver 102, the mover 103, the first motor 31, and the second motor 73.

The machine tool 100 according to the third embodiment provides effects similar to the effects provided by the cartridge 10A according to the first embodiment and the table rotator 1A according to the first embodiment, or the cartridge 10B according to the second embodiment and the table rotator 1B according to the second embodiment.

### (Optional Configurations)

Next, by referring to FIGs. 1 to 33, description will be made with regard to optional configurations employable in the third embodiment (or the first or second embodiment).

### (Mover 103)

In the example illustrated in FIG. 31, the mover 103, which moves the machining head 101, includes a first mover 103a, a second mover 103b, and a third mover 103c. The first mover 103a moves the machining head 101 in a direction along the X axis, which is parallel to a horizontal plane. The second mover 103b moves the machining head 101 in a direction along the Y axis, which is parallel to the horizontal plane. The third mover 103c moves the machining head 101 in a direction along the Z axis, which is perpendicular to the horizontal plane. In the example illustrated in FIG. 3, the X axis is parallel to the tilt axis AT, and the Y axis is perpendicular to an X axis direction.

In the example illustrated in FIG. 31, the mover 103, which moves the machining head 101, includes a first component 104a (for example, a saddle), a second component 105a (for example, a column), and a third component 106a. The first component 104a is supported by a base structure 70 so as to be movable in a direction along the X axis. The first mover 103a moves the first component 104a in a direction along the X axis relative to the base structure 70. The second component 105a is supported by the first component 104a so as to be movable in a direction along the Y axis. The second mover 103b moves the second component 105a in a direction along the Y axis relative to the first component 104a. The third component 106a is supported by the second component 105a so as to be movable in a direction along the Z axis. The third mover 103c moves the third component 106a in a direction along the Z axis relative to the second component 105a. The third component 106a includes the machining head 101 (in other words, the machining head 101 moves together with the third component 106a).

In the example illustrated in FIG. 31, the mover 103 is capable of moving the machining head 101 three-dimensionally. Alternatively, the mover 103 may be a device that moves the machining head 101 two-dimensionally or one-dimensionally. Alternatively or additionally, the mover 103 may be capable of moving the table 95 (more specifically, the table 95, which supports the workpiece) one-dimensionally, two-dimensionally, or three-dimensionally.

### (Base Structure 70)

In the example illustrated in FIG. 31, the machine tool 100 includes the base structure 70. To the base structure 70, the support base 71 (more specifically, the first support base 71a and the second support base 71b) is fixed.

### (Table 95)

As exemplified in FIG. 32, the table 95 supports the workpiece W. The table 95 may include a jig and/or a chuck 96 (for example, an electric chuck, a hydraulic pressure chuck, or a pneumatic chuck). The jig fixes the workpiece W. The chuck 96 grips the workpiece W. The chuck 96 may include a plurality of gripping pieces 96p. The plurality of gripping pieces 96p grip the workpiece W.

At least one gripping piece of the plurality of gripping pieces 96p may be configured to operate upon supply of working fluid (for example, oil) to the chuck 96 from the first fluid passage 17a (see FIG. 9). In the example illustrated in FIG. 33, the machine tool 100 includes a working fluid supplier 107. The working fluid supplier 107 supplies working fluid to the chuck 96 through the first tube 91a and the first fluid passage 17a. The working fluid supplied to the chuck 96 drives at least one gripping piece 96p to cause the workpiece W to be gripped by the plurality of gripping pieces 96p. It is to be noted that in a case that the working fluid is oil, the working fluid supplier 107 preferably includes a pump. Alternatively, in a case that the working fluid is air, the working fluid supplier 107 preferably includes an air compressor. The working fluid supplier 107 may include a first valve 107v. The first valve 107v is controlled by the controller 8. The first valve 107v opens and closes a fluid passage through which the working fluid is supplied to the first tube 91a.

It is to be noted that in a case that the chuck 96 is an electric chuck, the chuck 96 is connected to a power source via a feeding cable. It is also to be noted that at least one gripping piece of the plurality of gripping pieces 96p operates upon supply of power via a feeding cable.

The rotation body 11 or the table 95, which is mounted on the rotation body 11, may include a discharge port 97 (see FIG. 31). Through the discharge port 97, coolant liquid is discharged toward the workpiece W. In the example illustrated in FIG. 33, the machine tool 100 includes a coolant liquid supplier 108. The coolant liquid supplier 108 supplies coolant liquid to the discharge port 97 through the second tube 91b and the second fluid passage 17b. The coolant liquid supplier 108 preferably includes a pump. The coolant liquid supplier 108 may include a second valve 108v. The second valve 108v is controlled by the controller 8. The second valve 108v opens and closes a fluid passage through which the coolant liquid is supplied to the second tube 91b.

### (Controller 8)

In the example illustrated in FIG. 33, the controller 8 controls the rotational driver 102 of the machining head 101, the mover 103 (for example, the first mover 103a, the second mover 103b, and the third mover 103c), the first motor 31, and the second motor 73. Additionally, the controller 8 may control operation of the chuck 96. More specifically, the controller 8 may control the operation of the chuck 96 by controlling the working fluid supplier 107. Alternatively or additionally, by controlling the coolant liquid supplier 108, the controller 8 may control the discharge of the coolant liquid from the discharge port 97.

For example, the controller 8 transmits a first control command E1 to the rotational driver 102 to control the tool T to rotate about the third axis AX3. Upon receipt of the first control command E1, the rotational driver 102 rotates the tool T about the third axis AX3.

For example, the controller 8 transmits a second control command E2 to the mover 103 to control the workpiece W to be machined by the tool T. Upon receipt of the second control command E2, the mover 103 moves the machining head 101 relative to the workpiece W to control the tool T in a rotating state about the third axis AX3 to contact the workpiece W. In this manner, the workpiece W is machined by the tool T.

For example, the controller 8 transmits a third control command E3 to the first motor 31 to control the angle position of the workpiece W supported by the table 95 about the first axis AX1 to be changed. Upon receipt of the third control command E3, the first motor 31 rotates the table 95, which supports the workpiece W, about the first axis AX1. It is to be noted that the controller 8 may generate the third control command E3 based on a rotational angle command value generated by executing a machining program 822 and based on a rotational angle indicated by a signal output from the first encoder 31n.

For example, the controller 8 transmits a fourth control command E4 to the second motor 73 to change the posture of the workpiece W supported by the table 95. Upon receipt of the fourth control command E4, the second motor 73 tilts the table 95 (which supports the workpiece W), the cartridge 10, and the tilt base 61 about the tilt axis AT. It is to be noted that the controller 8 may generate the fourth control command E4 based on an inclination angle command value generated by executing the machining program 822 and based on an inclination angle indicated by a signal output from a second encoder 73n of the second motor 73.

For example, the controller 8 transmits a fifth control command E5 to the working fluid supplier 107 (or the electric motor of the chuck 96) to control the chuck 96 to grip the workpiece W. Upon receipt of the fifth control command E5, the working fluid supplier 107 (or the electric motor of the chuck 96) operates the chuck 96 to cause the chuck 96 to grip the workpiece W.

For example, the controller 8 transmits a sixth control command E6 to the coolant liquid supplier 108 to control coolant liquid to be discharged toward the workpiece W that is being machined by the tool T. Upon receipt of the sixth control command E6, the coolant liquid supplier 108 sends coolant liquid to the discharge port 97 through the second tube 91b and the second fluid passage 17b. Then, the discharge port 97 discharges the coolant liquid toward the workpiece W that is being machined by the tool T.

The controller 8 may be implemented by a single computer or a plurality of computers. As exemplified in FIG. 33, the controller 8 includes a hardware processor 80 (hereinafter referred to as "processor 80"), a memory 82, a communication circuit 84, and an input device 86 (for example, a touch panel-equipped display 862). The processor 80, the memory 82, the communication circuit 84, and the input device 86 are connected to each other via a bus 88. The data necessary for the machining of the workpiece W (for example, workpiece data 826, which includes data regarding the shape of the workpiece W and data regarding the machining position at which to machine the workpiece W) may be input into the controller 8 via the input device 86, or may be input into the controller 8 from another computer via the communication circuit 84. It is to be noted that the input device 86 will not be limited to the touch panel-equipped display 862. For example, the controller 8 may include: the input device 86 such as a button, a switch, a lever, a pointing device, and a keyboard; and a display that displays the data input to the input device 86 or other information.

By executing the machining program 822 stored in the memory 82, the controller 8 generates the plurality of control commands (for example, the first control command E1, the second control command E2, the third control command E3, the fourth control command E4, the fifth control command E5, and the sixth control command E6). The communication circuit 84 transmits the plurality of control commands generated by the controller 8 to the plurality of control target instruments (for example, the rotational driver 102, the mover 103, the first motor 31, the second motor 73, the working fluid supplier 107, and the coolant liquid supplier 108). Thus, the controller 8 is capable of controlling the plurality of control target instruments.

In the examples illustrated in FIGs. 31 and 32, the machine tool 100 is a vertical machining center. Alternatively, the machine tool 100 may be a horizontal machining center. The machine tool 100 may also be a multitasking machine capable of performing a plurality of kinds of machining.

The present invention will not be limited to the above-described and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

### Reference Signs List

1, 1A, 1B ... Table rotator, 8 ... Controller, 10, 10A, 10B ... Cartridge, 11 ... Rotation body, 11u ... Apex portion of rotation body, 12 ... Mounting portion, 12h ... Hole, 13 ... Inner ring, 14 ... Bearing, 14a ... Shank portion, 14r ... Roller, 15 ... Gear, 15a ... First gear, 15b ... Second gear, 16 ... Rotation shaft, 17 ... Fluid passage, 17a ... First fluid passage, 17b ... Second fluid passage, 18 ... Port, 18a ... First port, 18b ... Second port, 21 ... Roller gear cam, 23 ... Gear shaft, 23a ... One end portion of gear shaft, 23b ... Another end portion of gear shaft, 23m ... Center portion of gear shaft, 25 ... Protrusion, 25a ... First pressing surface, 25b ... Second pressing surface, 26 ... Rotor, 27 ... Lock component, 31 ... First motor, 31a ... Output shaft, 31n ... First encoder, 32 ... Adjustment component, 32r ... Eccentric ring, 41 ... Support component, 41c ... Oil chamber, 41e ... Outer circumferential edge, 41h ... First through hole, 42 ... Plate portion, 42d ... Depression, 42f ... Free end portion of plate portion, 42u ... Upper surface of plate portion, 43 ... Main portion, 43h ... Hole portion, 44 ... Wing portion, 45 ... First support, 45h ... Opening, 46 ... Closing assembly, 47 ... Second support, 47g ... Gear box, 47h ... Opening, 48 ... Closing plate, 49 ... Third support, 49h ... Opening, 49s ... Cylindrical side wall, 49w ... Bottom wall, 51 ... Outer ring, 53 ... Bearing, 55 ... Fixed shaft, 55w ... Bottom, 57 ... Closing component, 58 ... End plate, 61 ... Tilt base, 61w ... Bottom, 62a ... First end portion, 62b ... Second end portion, 62h ... Hole portion, 63 ... Depressed portion, 64 ... Housing, 64h ... Main opening, 64u ... Apex surface of housing, 64w ... Bottom, 69 ... Frame structure, 69b ... Bridge portion, 70 ... Base structure, 71 ... Support base, 71a ... First support base, 71b ... Second support base, 73 ... Second motor, 73n ... Second encoder, 80 ... Hardware processor, 82 ... Memory, 84 ... Communication circuit, 86 ... Input device, 88 ... Bus, 91a ... First tube, 91b ... Second tube, 93a ... First closing component, 93b ... Second closing component, 95 ... Table, 96 ... Chuck, 96p ... Gripping piece, 97 ... Discharge port, 100 ... Machine tool, 101 ... Machining head, 102 ... Rotational driver, 103 ... Mover, 103a ... First mover, 103b ... Second mover, 103c ... Third mover, 104a ... First member, 105a ... Second member, 106a ... Third member, 107 ... Working fluid supplier, 107v ... First valve, 108 ... Coolant liquid supplier, 108v ... Second valve, 270 ... Clamp component, 271 ... Chamber, 273 ... Pressing surface, 410h ... Connection hole, 411c ... First chamber, 412c ... Second chamber, 424 ... First plate portion, 425 ... Second plate portion, 461 ... Lid component, 491s ... Upper cylindrical side wall, 492s ... Lower cylindrical side wall, 493s ... Stepped portion, 641 ... Edge portion, 641p ... Protrusion, 642 ... Stepped surface, 644 ... Upper part of housing, 645 ... Side wall, 645a ... First side wall, 645b ... Second side wall, 645h ... Second through hole, 822 ... Machining program, 826 ... Workpiece data, 862 ... Touch panel-equipped display, 931a ... Transparent component, AT ... Tilt axis, AX1 ... First axis, AX2 ... Second axis, AX3 ... Third axis, CA ... Cover, CA 1 ... First cover, CA 2 ... Second cover, CA 3 ... Third cover, CA 4 ... Fourth cover, CB 1 ... Feeding cable, CB 2 ... Signal cable, *DR1* ... First direction, *DR2* ... Second direction, *DR3* ... Third direction, *DR4* ... Fourth direction, *DR5* ... Fifth direction, E1 ... First control command, E2 ... Second control command, E3 ... Third control command, E4 ... Fourth control command, E5 ... Fifth control command, E6 ... Sixth control command, OP ... Subordinate opening, OP1 ... First opening, OP2 ... Second opening, OP3 ... Third opening, OP4 ... Fourth opening, OP5 ... Another opening, R1 ... First rotation direction, R2 ... Second rotation direction, SP ... Space, T ... Tool, W ... Workpiece

## Claims

1. A cartridge comprising:
a rotation body rotatable about a first axis and comprising:
a mounting portion on which a table configured to support a workpiece is mounted; and
a bearing;
a roller gear cam configured to transfer drive power to the bearing to rotate the rotation body about the first axis;
a first motor configured to drive the roller gear cam; and
a support component mountable on a tilt base in a state in which the support component is supporting the rotation body, the roller gear cam, and the first motor, the tilt base being tiltable about a tilt axis.

2. The cartridge according to claim 1,
wherein the support component comprises an oil chamber in which oil is storable,
wherein the roller gear cam comprises
a gear shaft extending along a second axis, and
a protrusion spirally provided at an outer circumferential surface of the gear shaft and pressing the bearing, and
wherein at least one of the protrusion or the bearing is provided in the oil chamber.

3. A table rotator comprising:
a cartridge; and
a tilt base tiltable about a tilt axis,
wherein the cartridge comprises
a rotation body rotatable about a first axis and comprising:
a mounting portion on which a table configured to support a workpiece is mounted; and
a bearing;
a roller gear cam configured to transfer drive power to the bearing to rotate the rotation body about the first axis;
a first motor configured to drive the roller gear cam; and
a support component mountable on the tilt base in a state in which the support component is supporting the rotation body, the roller gear cam, and the first motor,
wherein the tilt base comprises a depressed portion configured to receive the roller gear cam, the first motor, and the rotation body,
wherein an insertion direction in which the roller gear cam is inserted into the depressed portion is defined as a first direction, and
wherein in a view from a direction along the first direction, the rotation body, the roller gear cam, and the first motor are provided inward of an outer circumferential edge of the support component.

4. The table rotator according to claim 3, wherein in a view from a direction along the first axis, the rotation body, the roller gear cam, and the first motor are provided inward of the outer circumferential edge of the support component.

5. The table rotator according to claim 3 or 4,
wherein the cartridge comprises
a gear configured to transfer motive power of the first motor to the roller gear cam,
an adjustment component configured to adjust a position of the gear, and
a lock component configured to lock a rotation of the roller gear cam,
wherein the tilt base comprises
a main opening configured to be blocked by the cartridge, and
a subordinate opening different from the main opening,
wherein the tilt base comprises a cover configured to cover the subordinate opening, and
wherein in a state in which the cover is removed from the subordinate opening, at least one of the first motor, the gear, the adjustment component, or the lock component is visually recognizable from outside the tilt base through the subordinate opening.

6. The table rotator according to claim 3 or 4,
wherein the tilt base comprises
a main opening configured to be blocked by the cartridge, and
a first opening having a size that permits the first motor to pass through, and
wherein the tilt base comprises a first cover configured to cover the first opening.

7. The table rotator according to claim 3 or 4,
wherein the rotation body comprises a rotation shaft including a fluid passage through which a fluid passes,
wherein the cartridge comprises a closing component configured to close an opening formed in a bottom wall of the support component,
wherein a port fluidally connected to the fluid passage is provided at the closing component,
wherein the tilt base comprises
a main opening configured to be blocked by the cartridge, and
a second opening through which the closing component is accessible, and
wherein the tilt base comprises a second cover configured to cover the second opening.

8. The table rotator according to claim 3 or 4,
wherein the cartridge comprises a gear configured to transfer motive power of the first motor to the roller gear cam,
wherein the tilt base comprises
a main opening configured to be blocked by the cartridge, and
a third opening through which the gear is accessible, and
wherein the tilt base comprises a third cover configured to cover the third opening.

9. The table rotator according to claim 8,
wherein the support component comprises an oil chamber in which oil is storable,
wherein the roller gear cam comprises
a gear shaft extending along a second axis, and
a protrusion spirally provided at an outer circumferential surface of the gear shaft and pressing the bearing, and
wherein at least one of the protrusion, the bearing, or the gear is provided in the oil chamber.

10. The table rotator according to claim 3 or 4,
wherein the cartridge comprises a lock component configured to lock a rotation of the roller gear cam,
wherein the tilt base comprises
a main opening configured to be blocked by the cartridge, and
a fourth opening through which the lock component is accessible, and
wherein the tilt base comprises a fourth cover configured to cover the fourth opening.

11. The table rotator according to any one of claims 3 to 10, wherein the support component comprises
a plate portion mounted on the tilt base,
a first support protruding from the plate portion toward a bottom portion of the tilt base and supporting the roller gear cam,
a second support protruding from the plate portion toward the bottom portion of the tilt base and supporting the first motor, and
a third support protruding from the plate portion toward the bottom portion of the tilt base and supporting the rotation body.

12. The table rotator according to any one of claims 3 to 11, wherein the cartridge has an approximately rectangular shape in a view from a direction parallel to the first axis.

13. The table rotator according to any one of claims 3 to 8, further comprising a first closing component,
wherein the roller gear cam comprises,
a gear shaft extending along a second axis, and
a protrusion spirally provided at an outer circumferential surface of the gear shaft and pressing the bearing,
wherein the support component comprises
an oil chamber in which oil is storable, and
a first through hole fluidally connected to the oil chamber,
wherein the tilt base comprises a second through hole, and
wherein the first closing component is inserted in the second through hole to cover the first through hole.

14. The table rotator according to claim 13, wherein at least a part of the first closing component comprises a transparent component through which the oil is visually recognizable.

15. A machine tool comprising:
a machining head configured to support a tool that is configured to machine a workpiece, the machining head comprising a rotational driver configured to rotate the tool;
a mover configured to move the machining head relative to the workpiece;
a table rotator comprising:
a table configured to support the workpiece;
a cartridge comprising a first motor;
a tilt base;
a support base supporting the tilt base so as to be tiltable; and
a second motor configured to tilt the tilt base about a tilt axis relative to the support base; and
a controller configured to control the rotational driver, the mover, the first motor, and the second motor,
wherein the cartridge comprises
a rotation body rotatable about a first axis and comprising:
a mounting portion on which the table is mounted; and
a bearing,
a roller gear cam configured to transfer drive power to the bearing to rotate the rotation body about the first axis,
the first motor configured to drive the roller gear cam, and
a support component mountable on the tilt base in a state in which the support component is supporting the rotation body, the roller gear cam, and the first motor,
wherein the tilt base comprises a depressed portion configured to receive the roller gear cam, the first motor, and the rotation body,
wherein an insertion direction in which the roller gear cam is inserted into the depressed portion is defined as a first direction, and
wherein in a view from a direction along the first direction, the rotation body, the roller gear cam, and the first motor are provided inward of an outer circumferential edge of the support component.
